# EUROPEAN PATENT SPECIFICATION

(11) **EP 4 279 446 B1**
(45) Date of publication and mention of the grant of the patent: **17.04.2024**
(21) Application number: 22290034.2
(22) Date of filing: 17.05.2022
(51) Int. Cl.: C01B 3/38, C01B 3/48, C01B 3/50, C01B 3/56

(54) **PLANT AND PROCESS FOR PRODUCING HYDROGEN FROM HYDROCARBONS**
ANLAGE UND VERFAHREN ZUR GEWINNUNG VON WASSERSTOFF AUS KOHLENWASSERSTOFFEN
INSTALLATION ET PROCÉDÉ DE PRODUCTION D'HYDROGÈNE À PARTIR D'HYDROCARBURES

(43) Date of publication of application: 22.11.2023
(73) Proprietor: Technip Energies France, 92741 Nanterre Cedex (FR)
(72) Inventor: Riegman, Jan-Jaap, 92741 Nanterre Cedex (FR); Hesselink, Willem, 92741 Nanterre Cedex (FR); Pitcher, Matthew Bowers, 92741 Nanterre Cedex (FR); Panjwani, Gopal, 92741 Nanterre Cedex (FR); Elseviers, Wim Frans, 92741 Nanterre Cedex (FR)
(74) Representative: McWilliams, David John

(56) References cited:
- WO-A1-2021/175662
- WO-A1-2022/040677
- US-A1- 2012 039 794

## Description

The present invention relates to a hydrogen plant and a process for producing a hydrogen-comprising product gas from a hydrocarbon feedstock implementing this plant.

Plants for producing hydrogen from hydrocarbons, in particular steam methane reforming (SMR) plants, are widely applied in refinery complexes to supply hydrogen for upgrading of several products, for example in hydrocracking, hydrogenation or hydrodesulphurization. Additionally, hydrogen is used as a component of syngas (a mixture comprising hydrogen and carbon monoxide). Syngas is an essential building block to produce for example ammonia, methanol, synthetic fuels ..... Furthermore there is growing interest in using hydrogen as such as an alternative to petroleum-based fuel in energy sector as a means to provide seasonal energy storage, in industry to provide high quality heat and in mobility mostly for heavy and long hauls transportation means. It is estimated that about 95% of the global hydrogen supply is produced from fossil fuels; as by-product of the technology, CO2 is produced and emitted to the atmosphere. The CO2 is produced not only by combustion of a carbon-based fuel for heating the feedstock to the temperatures needed to carry out the reforming, but CO2 is also formed as a side-product in the hydrogen production: the steam reforming reaction produces carbon monoxide (with methane as a starting compound: CH4 + H2O & CO +3 H2), which is subsequently converted to carbon dioxide via the water gas shift reaction (CO + H2O 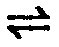 CO2 + H2). The steam reforming reaction is highly endothermic and requires a significant additional heat input which is traditionally supplied by combustion of waste gasses from the hydrogen production and a hydrocarbon make-up fuel. The endothermic character of steam reforming, but also of dry-reforming (a process wherein use is made of CO2 instead of steam as a further reformer reaction) makes these processes highly distinct from exothermic reforming, also known as autothermal reforming (ATR) or partial oxidation reforming. As the skilled person will understand, exothermic reforming processes are carried out without needing a significant heat input for the required heat of reaction, such as heat generated in a radiant section of a fired reforming system.

In recent years an increasing industrial focus on the environmental emissions and reduction of the carbon footprint challenges the design of hydrogen production facilities (a.k.a. Hydrogen Production Units: HPU's) to reduce carbon footprint as well.

Traditionally, hydrogen plants were integrated with a refinery or industrial complex where the generated excess steam could be used, since the hydrogen plant is considered as an efficient steam producer, in order to recover as much low grade heat as possible, the excess steam generated was optimized to meet the external steam demand, making the excess steam a valuable by-product of the facility. Consequently, the firing and thus CO2 emissions were not the main design parameters but this changes with the evolving regulations on greenhouse gas emissions. Many different solutions have been proposed to reduce the steam production of the hydrogen plant by reducing the firing in the reformer. The options include preheating the combustion air (up to typically 600°C) with flue gas or another indirect heat source, preheating fuel and/or tail gas, applying an adiabatic (pre)reforming step. All these solutions reduce the required firing in the reformer and thereby thus also the export steam flowrate and CO2 emission. However, the majority of the CO2 emitted through the flue gas comes from the tail gas comprising methane, and further residual hydrogen, carbon monoxide and carbon dioxide produced as part of the reforming reaction. This tail gas is typically generated as the waste stream of the final product purification, carried out by an Adsorption-based process (e.g., Pressure Swing Adsorption, PSA).

In recent years, with more focus on CO2 emissions, a commonly applied solution is to capture CO2 from the syngas, downstream of the (final) shift reactor. WO 2022/040677 A1 discloses such a plant for the production of hydrogen. Hydrogen product that is this obtained is generally referred to as blue hydrogen. The total reduction of CO2 emissions is limited by the CH4 and CO slip from the reformer system and shift section, respectively, on the process side and the amount of additional fossil fuel fed as make-up fuel to meet the heat duty requirement of the reforming process. The methane slip may be reduced by operating at high reformer outlet temperature, which requires more firing.

So, a continuing need exists to provide alternative processes and equipment to reduce greenhouse gas emissions (carbon dioxide, methane), e.g. to allow refurbishment of existing HPU's. In particular, a continuing need exists to provide an efficient way to produce hydrogen from hydrocarbon feeds by reformation processes, whereby in particular the same hydrogen production capacity can be maintained with smaller reformer systems, and/or whereby greenhouse gas emissions (carbon dioxide and/or methane) are (further) reduced and/or whereby global carbon footprint is (further) reduced. In particular, it would be desired to reduce the hydrocarbon consumption (i.e. use of hydrocarbon for other purposes than generating hydrogen product gas from it) in combination with providing a possibility to reduce the needed carbon dioxide capture flow rate in order to be able to reduce carbon dioxide emissions.

It is an object of the present invention to address one or more of said needs. One or more alternative or additional objects which may be addressed follow from the description below.

An object of the invention is a hydrogen plant comprising :
- At least one reformer 5 for converting a hydrocarbon feedstock 1 into a gas stream comprising hydrogen, carbon monoxide, and at least one hydrocarbon as impurity, said reformer comprising a fired tubular reformer 5, a radiant section 12, a convection section 13 and a heat recovery section 6,
- One water gas shift (WGS) reactor 7 for converting the carbon monoxide of the gas stream into carbon dioxide and hydrogen,
- A carbon dioxide removal unit 20 downstream of the WGS reactor and configured to remove carbon dioxide from the gas stream,
- A hydrogen recovery unit 8 downstream of the carbon dioxide removal unit 20 for producing a hydrogen-enriched gas stream 9 and a waste gas stream 10,
- A passageway for feeding the radiant section 12 of the reformer 5 with a first part 10 of the waste gas stream from hydrogen recovery unit,
- A compressor 27 for compressing a second part 26 of the waste gas stream from hydrogen recovery unit 8,
- A membrane separation system 40 (selective for the permeation of hydrogen) configured to be fed by the compressed second part 28 of the waste gas stream and to produce a hydrogen-enriched permeate 42 and a hydrocarbon-enriched retentate 41,
- Passageway for recycling the hydrogen-enriched permeate in the radiant section 12 of the reformer, and
- Passageway for recycling the hydrocarbon-enriched retentate upstream of the reformer in the hydrocarbon feedstock,
with the reformer (5) comprising a recuperative reformer in the radiant section (12) and/or in parallel a heat exchanger reformer (22).

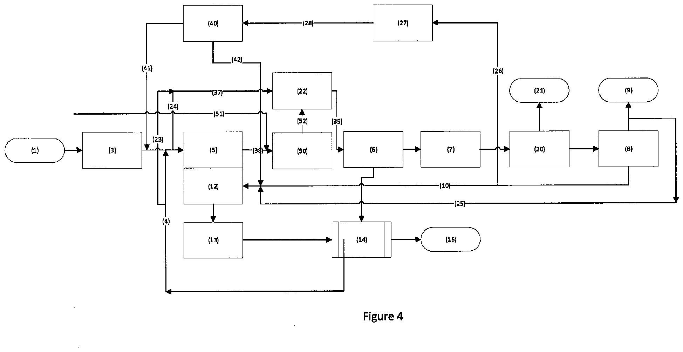

The figure 4 represents the hydrogen plant according to the present invention. With the expression "recuperative reformer" we mean a reformer consisting of one or more tubular catalyst tubes where the catalyst tubes comprise of an outer annulus with a catalyst bed 36. The heat required for the reforming reaction is provided from the outside (from the firebox) as well as from the inner tube/ annulus. Subsequently the feed is reacting and heated up over the catalyst bed and the formed reformate 31 has the highest temperature. The reformate is than cooled down inside the catalyst tube in an annulus/tube, to exchange heat to the catalyst and exits the tube at a lower temperature than the catalyst outlet temperature.

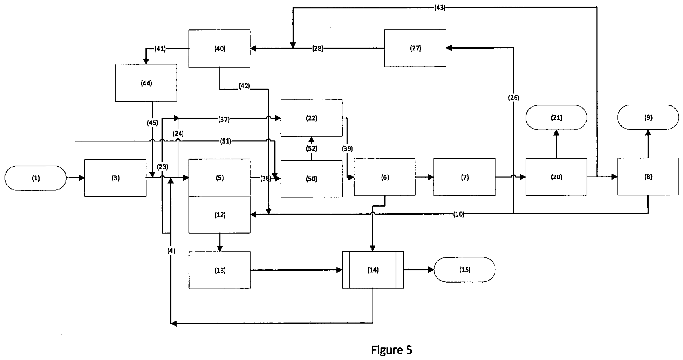

Depending on the embodiment, the hydrogen plant according to the present invention can comprise one or more of the following features:
- the hydrogen plant comprises passageway for feeding the membrane separation system 40 with a part of the gas stream delivered by the carbon dioxide removal unit. The figure 5 represents this preferred hydrogen plant of the present invention.
- The hydrogen plant comprises a passageway for feeding the radiant section 12 of the reformer 5 with a first part 25 of the hydrogen-enriched gas stream from hydrogen recovery unit
- the hydrogen recovery unit 8 is a pressure swing adsorption unit, a hydrogen-retaining membrane, a cryogenic recovery unit or an electrochemical compressor.
- the hydrogen plant comprises upstream of the reformer a hydrodesulphurization unit 3.
- the hydrogen-permeating membrane separation system 40 comprises membrane elements based on polysulphone, poly-imid, poly-aramid, cellulose-acetate, or other polymer that exhibits a selectvity for permeating hydrogen to a lower pressure.
- The hydrogen plant comprises an autothermal reformer unit 50 configured to be fed by the gas stream from the fired tubular reactor 5 and by an oxygen rich stream 51,
   with the heat-exchanger reformer 22 configured to receive heat 52 provided by the autothermal reformer unit and to produce a gas stream 39 comprising hydrogen and carbon monoxide, and with the water gas shift reactor (7) being fed by the gas stream from the heat-exchanger reformer.
- The hydrogen plant comprises several heat-exchanger reformers, several fired tubular reformers and one autothermal reformer.
- the membrane separation system 40 comprises several membrane stages. For example the membrane separation system 40 comprises a first membrane separation unit able to receive the gas flow coming from the compressor 27 and to supply a first permeate and a first retentate; a second membrane separation unit able to receive the first retentate and to supply a second permeate and a second retentate; and a third membrane separation unit able to receive the first permeate and to supply a third permeate and a third retentate; with the second retentate being hydrocarbon-enriched retentate 41 and the first permeate being hydrogen-enriched permeate 42, whereas second permeate is recycled to the inlet of compressor 27. According a second example, the membrane separation system 40 comprises a first membrane separation unit able to receive the gas flow coming from the compressor 27 and to supply a first permeate and a first retentate; a second membrane separation unit able to receive the first retentate and to supply a second permeate and a second retentate; with the second retentate being hydrocarbon-enriched retentate 41 and the mixture of first permeate and second permeate being the hydrogen-enriched permeate 42.

Preferably, the first membrane separation unit and second membrane unit operate at the same temperature. Preferably, the first membrane separation unit and second membrane unit operate at a different temperature. Preferably, the first membrane separation unit operates at a lower temperature than the second membrane unit.
- The fired tubular reformer comprises a plurality of reformer reaction tubes, generally each having an inlet 30 for hydrocarbon feed and steam, a reaction zone 36 through which the hydrocarbon-steam mixture is fed and an outlet for reformate out of the unit 33. These reformer reaction tubes are situated in the radiant section and thus directly receive heat from the radiant section 12.

Preferably, one or more fired tubular reformers 5 are heat-recuperating reformer reactor; a heat-recuperating reformer reactor is a reforming reactor wherein the reformate is used as a source of heat for heating the hydrocarbon, hydrogen and water inside the reformer unit 5. Thus, as is known in the art, heat-recuperating reformer reactor units typically comprise a reformer catalyst zone, wherein the reformate is formed and a reformate passageway downstream of the catalyst zone leading to reformate to the outlet of the heat-recuperating reformer reactor unit. The reformate passageway is arranged to transfer heat from said reformate present in the reformate passageway to said reformer catalyst zone. The transfer of heat is by heat conduction for at least a substantial part, typically via a heat conductive partition (P), typically a wall of a heat conductive material, between reformate passageway and catalyst zone. Thus, in recuperative reforming available heat from the reformate to the catalyst is directly used to provide at least part of the heat of reaction in the catalyst zone. More specifically the heat exchange is thus directly between reformate and the gas in the catalyst zone. The required duty to be supplied by firing is thus intrinsically reduced, and does not need to be (fully) recovered from the flue gasses from the radiant section.

Reformate 39 comprises H2, CO, CO2, usually water and usually methane. Further inert gas may be present in particular nitrogen. Water is usually present, such as unreacted steam, when steam is used as a further reactant. When using carbon dioxide as the further reaction (dry reforming), water is usually also formed: the primary reforming reaction (for methane) is CH4 + CO2 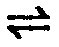 2CO +2 H2. However, a secondary reaction usually also takes place, at least to some extent, whereby water is formed: CO2 + H2 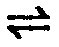 CO + H2O.

The catalyst comprised in the fired tubular reformer(s) 5 is usually also present in the heat-exchanger reformer 22, in an embodiment wherein reforming reaction units are provided in parallel. In particular, the reformer tube(s) of a heat-recuperating reformer reaction unit preferably comprises a structured catalyst. This allows to achieve a higher throughput per reformer tube and as a result higher active surface area, while allowing for lower pressure drop compared to a conventional reformer tube, comprising a catalyst bed with loose or packed catalyst with equivalent catalyst surface density. This allows indeed to decrease the volume of catalyst needed to process a given amount of feed stock into syngas, compared to conventional packed catalyst pellets bed.

Hydrogen recovery units 8, such as pressure swing adsorption (PSA) units adapted to recover a hydrogen enriched product gas from a process gas containing hydrogen and hydrogen-selective gas membrane separators are particularly suitable to provide the hydrogen-comprising gas stream 9 in accordance with the invention. Preferably, the hydrogen-enriched gas stream 9 comprises more than 99,0% and preferably more than 99.9% of hydrogen.

Another object of the present invention is a process for producing a hydrogen-comprising product gas from a hydrocarbon feedstock implementing hydrogen plant as defined in the present invention, comprising:
a) Reforming step of the hydrocarbon feedstock 1 to produce a gas stream comprising hydrogen, carbon monoxide, and at least one hydrocarbon as impurity,
b) Water gas shift step 7 to convert the carbon monoxide of the gas stream into carbon dioxide and hydrogen,
c) removal step 20 of carbon dioxide from step b),
d) hydrogen recovery step 8 to produce a hydrogen-enriched gas stream 9 and a waste gas stream 10 from gas stream coming from step c),
e) feeding step of the radiant section 12 of the reformer with a first part of the waste gas stream 10 from hydrogen recovery unit 8,
f) compressing step 27 of a second part of the waste gas stream 10 from hydrogen recovery unit 8,
g) membrane separation step 40 of the compressed second part of the waste gas stream in the membrane separation system to produce a hydrogen-enriched permeate 42 and a hydrocarbon-enriched retentate 41,
h) a first recycling step of the hydrogen-enriched permeate in the radiant section 12 of the reformer 5, and
i) a second recycling step of the hydrocarbon-enriched retentate upstream of the reformer.

Depending on the embodiment, the process for producing a hydrogen-comprising product gas from a hydrocarbon feedstock according to the present invention can comprise one or more of the following features:
- the feeding step of the hydrogen-permeating membrane separation system 40 with a part of the gas stream delivered by the carbon dioxide removal unit 20;
- the hydrogen recovery step 8 is a pressure swing adsorption step, a hydrogen-retaining membrane separation step, a cryogenic separation step or an electrochemical compression step;
- The process comprises a hydrodesulphurization step 3 of the hydrocarbon feedstock.
- the reforming step a) comprises:
   - a conventional steam reforming sub-step (CSR) carried out in the reformer comprising a fired tubular reformer 5, a radiant section 12 and a convection section 13 and producing a first gas stream comprising hydrogen and carbon monoxide,
   - a gas heated steam reforming sub-step (GHR) carried out in the heat-exchanger reformer 22 and producing a second gas stream 39 comprising hydrogen and carbon monoxide, and
   - an autothermal reforming sub-step (ATR) carried out in the autothermal reformer 50 and producing a third gas stream 52 comprising hydrogen and carbon monoxide,

   with CSR sub-step and GHR sub-step carried out in parallel, and CSR sub-step and ATR sub-step carried out in series,
   with the autothermal reformer unit 50 being fed by the gas stream 38 from the fired tubular reactor 5 and by an oxygen rich stream 51, and
   with the heat-exchanger reformer 22 receiving the heat of the third gas stream 52 provided by the autothermal reformer 50. The oxygen rich stream can be air, enriched air with more than 30% of oxygen or high purity oxygen with more than 90%, preferably more than 99% of oxygen.
- the first gas stream 38 contains more than 30% of hydrogen, preferably more than 45% of hydrogen, the second gas stream 39 contains more than 30% of hydrogen, preferably more than 47% of hydrogen and the third gas stream 52 contains more than 35% of hydrogen, preferably more than 50% of hydrogen.
- Process comprises between step a) and step b) an heat recovery step 6 of the second gas stream before its introduction in the water gas shift reactor 7.
- At the compressing step 27, second part of the waste gas stream 10 is compressed at a pressure between 15 and 45 bar, preferably between 25 and 35 bar.

The invention is described more fully herein with reference to the accompanying drawings, in which embodiments of the invention are shown, including some optional elements, e.g. hydrodesulphurization unit 3, water gas shift (WGS) reactor 7 or parallel heat-exchanger reformer 22. Also locations of units and process lines may deviate from what is schematically shown. E.g. in some embodiments a carbon dioxide capture unit may be provided downstream of a hydrogen recovery unit 8 for obtaining the hydrogen gas product, in a passage way for waste gas stream 10 to the radiant section 12. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

The skilled person will be able to design and operate suitable operational units of the hydrogen plant or used in a process according to the invention, using the present disclosure in combination with common general knowledge and optionally one or more of the documents cited herein. E.g. the skilled person will be able to provide suitable process/plant units (e.g. a reformer units, shift reactor zone units, carbon dioxide recovery units, hydrogen recovery units, heat exchanger units) and passage ways, e.g. pipes, lines, tubes or other channels for passing gases or liquids from one processing unit to another, directly or indirectly, based on the present disclosure, the cited documents and common general knowledge.

The gas stream delivered by the carbon dioxide removal unit 20 can be called "Carbon dioxide-depleted process gas". Carbon dioxide-depleted process gas is the intermediate product gas obtained after subjecting the reformate or shift reactor process gas (which may have been further processed before being fed to carbon dioxide removal unit) to treatment whereby at least a substantial part, preferably essentially all carbon dioxide is removed from the process gas that has been fed into said unit. Carbon dioxide depleted product comprises H2, CO and usually methane. Water may also be present. Further inert gas may be present in particular nitrogen. Carbon dioxide depleted process gas is also referred to as crude hydrogen.

Advantageously the waste gas stream comprises H2, CO and usually methane, preferably at least 90% of H2, at least 4% of CO and 3% of methane.

Advantageously the hydrogen-permeating membrane separation step 40 comprises:
- a first sub-step of providing the first membrane separation unit with the gas flow coming from the compressor so as to produce a first retentate and a first permeate,
- a second sub-step of providing the second membrane separation unit with the first retentate so as to produce a second retentate and a second permeate,
- a third sub-step of recycling the second permeate in the compressor 27,

with each membrane separation unit comprising at least a membrane more permeable to hydrogen than to hydrocarbon, and
with the second retentate being hydrocarbon-enriched retentate 41 and the third permeate being hydrogen-enriched permeate 42.

Advantageously the membrane separation step 40 comprises:
- a first sub-step of providing the first membrane separation unit with the gas flow coming from the compressor so as to produce a first retentate and a first permeate,
- a second sub-step of providing the second membrane separation unit with the first retentate so as to produce a second retentate and a second permeate,
- a third sub-step of providing a third membrane separation unit with the first permeate so as to produce a third retentate and a third carbon dioxide-rich permeate,
- a fourth sub-step of recycling the second permeate in the compressor 27,

with each membrane separation unit comprising at least a membrane more permeable to hydrogen than to hydrocarbon, and
with the second retentate being hydrocarbon-enriched retentate 41 and the third permeate being hydrogen-enriched permeate 42.

It is particularly advantageous aspect of the present invention that it recovers at least part of the hydrogen in first part of the waste gas stream 10 from hydrogen recovery unit 8 at low pressure (i.e. a pressure comprises between 0.1 and 1.0 bar) which is applied as a no carbon fuel in the radiant section 12. This significantly reduces the flowing through the process side without producing additional hydrogen. As such, typically up to 90% of the hydrogen in the first part of the waste gas stream 10 is recovered and used as fuel resulting in and reduction hydrogen product as a make-up fuel. The hydrogen-enriched permeate 42 is delivered at a low pressure (i.e. a pressure comprises between 1 and 10 bar), which is sufficiently high to be applied as a fuel for the radiant section 12. The volumetric flowrate of the hydrocarbon-enriched retentate 41 is typically reduced by 60-80 %, and is positively contributing to converting the feedstock to hydrogen and carbon dioxide, which is subsequently captured. This combined effect lowers both the hydrocarbon consumption as well as the CO2 emissions form the reformer. Explain differently the waste stream contains 90%hydrogen and recovering this reduces the waste gas recycle flow by 75-85%. This also means that there is less flowrate through the plant and thus less heating up (=less firing), which than requires less hydrogen fuel (so less hydrogen to be produced) and thus even less fuel.

These benefits are particularly advantageous in combination with recuperative reformer, which allows direct heat transfer from the reformate formed in the fired reformer unit to a mixture of hydrocarbon feed and further reactant (steam, carbon dioxide or a mixture thereof) taking place inside a reformer unit. Thus, heat transfer typically takes place for at least a substantial part by conduction rather than by convection, as is the case when a feed for a reformer unit is pre-heated by flue gasses. The reformer unit wherein the heat transfer takes place can be the fired reforming unit (in case a heat-recuperating reformer unit is used) or reformate effluent from the fired reformer unit can be fed as a heat exchange medium to a (non-fired) parallel heat-exchanger reforming unit. Further, heat transfer to the hydrocarbon and further reaction inside the reformer is advantageous because thereby part of the needed heat for the reaction is directly supplied where it is needed for the reforming reaction (i.e. in the reformer catalyst zone). The concept of the present invention thus allows intrinsically a reduction of the firing as well and because of that reduces the amount of fuel to be fired. In this respect it should also be noted that there is a limitation to the amount of heat that can be used for preheating of the feed, as the inlet temperature of the feed into the reformer unit is limited due to the risk of carbon formation, if the feed is pre-heated to too high a temperature before being contacted with the reformer catalyst. Additionally, due to the endothermic nature of the steam reforming reaction a higher inlet temperature does not reduce the required firing duty significantly as the majority of the heat is required for the heat of reaction. The direct heating of the reforming reaction unit with recuperative reformer or a parallel non-fired reformer unit thus provides for further heat integration compared to heating the feed upstream of the reformer.

More in particular, this advantage has a cumulative effect when combined with the hydrogen-permeating membrane separation system in the recycle stream. As a result of the hydrogen-permeating membrane, the recycle stream to upstream the reformer is reduced and thus requiring less firing in the radiant section. As hydrogen product is applied as make-up fuel this would also require less hydrogen production and thus even further reduced firing. Additionally, the hydrogen rich permeate stream provides up to 70%, in particular 20-40%, even more preferred 25-30% of the total fired duty, even further reducing the hydrogen product make-up fuel flowrate. The beneficial effect of the recuperative reforming further decreases the hydrogen flowrate. The present invention thus allows for a significant decrease of hydrocarbon consumption.

In a process according to the invention, hydrogen produced from hydrocarbon feed is used as fuel. The priority fuel is the hydrogen-enriched permeate 42 from the hydrogen-permeating membrane separation system 40 and the required make-up fuel is supplied as part of the product hydrogen. When the further reforming reactant comprises steam, carbon dioxide is formed as a side-product in order to obtain said hydrogen and forms part of the reformate (a process gas), rather than being formed by combustion of hydrocarbon in the radiant zone. In dry forming unreacted carbon dioxide, this carbon dioxide also forms part of the reformate. Hereby, the CO2 can conveniently be captured from the process gas, together with CO2 formed to produce the part of the hydrogen that becomes (part of) the hydrogen-comprising product, withdrawn from the process, rather than being emitted to the atmosphere. As the hydrogen firing increases the feed consumption as more hydrogen is required, therefore either recuperative reforming and/or parallel heat exchange reformer reactor is applied to minimize the firing in the reformer. Thus, the design of the reformer and the use of the produced hydrogen act in combination to reduce greenhouse gas emissions and/or global carbon footprint. By further combining the reformer configuration, the use of hydrogen firing with carbon dioxide capture to remove carbon dioxide from process gas (reformate, shift reactor product) the carbon footprint is further reduced.

The present invention allows high severity reforming, especially when a heat recuperative reforming reaction unit is provided. High severity reforming in this case means high heatflux, high outlet temperature and high throughput. The concept reduces the catalyst tube wall temperatures and has low pressure drop. The highly effective heat transfer also helps to allow higher heatflux and thus higher severity. Although heat recuperative reforming allows even higher severity, or uses of heat exchanger reformer 22 in parallel to a fired tubular reformer 5 in combination with hydrogen firing, waste gas stream recycles and a hydrogen-permeating membrane separation system in the waste gas recycle stream and are also effective in reducing carbon dioxide emissions as well as hydrocarbon emissions. In preferred embodiments, the present invention allows a reduction of about 95 % or more of the direct CO2 emissions of a typical hydrogen plant. The preferred embodiment in particular provides additional savings of close to 20% of the direct CO2 emissions and a reduction of 4% of hydrocarbon consumption compared to a state of the art low carbon emission hydrogen plant. Considering that removal of CO2 becomes progressively more difficult, this is a significant improvement. As illustrated in the examples the preferred embodiments (case 3) shows a reduction of close to 99% of the direct CO2 emissions compared to the conventional operation base case (case 1) and a further close to 20% reduction of a state of the art low carbon emission hydrogen plant (case 2) without the hydrogen membrane in the recycle stream. Additionally, power consumption is decreased as well resulting in a reduction of global CO2 footprint of 11% compared to case 2. The overall CO2 emission reduction is also reflected by a reduction of the hydrocarbon consumption of 4%.

It is further, noteworthy that the Examples illustrate that the invention allows a further reduction in carbon dioxide emissions while decreasing the reformer size the reformer size compared to a state of the art design, as exemplified by case 2 In fact, the complete plant size, including the front-end desulfurization 3 and the back-end shift 7 and purification (such as carbon dioxide capture, hydrogen recovery) can be reduced compared to the state of the art plant.

Next, processes and plants according to the invention are described in further detail.

The hydrocarbon feedstock (1) fed into the reformer system can be any hydrocarbon feedstock suitable for being subjected to reformation by reaction with water. It can in particular be a feedstock wherein the hydrocarbon is a feedstock at least substantially consisting of methane, such as natural gas or a biogas-based methane stream; propane gas (LPG), naphtha or refinery off-gas.

Dependent on the purity of the feedstock, the feedstock may be subjected to a pre-treatment in a pre-treatment section (3), such as hydrodesulphurization. Pretreatments, conditions therefore and suitable pre-treatment units, may be based on known technology. In particular, when using a pre-treatment such as hydrodesulphurization, a make-up stream comprising hydrogen is usually added to the feed to ensure purification of the feed in the hydrodesulphurization section. As discussed below, a stream comprising hydrogen produced in a process according to the invention can be used to that purpose, in particular hydrogen product gas or waste gas from a hydrogen recovery unit.

The hydrocarbon feedstock is mixed with further reformate reactant, i.e. water (steam), carbon dioxide or a mixture thereof, before being subjected to the reaction in the reformer reaction unit (5 and optionally 22). Optionally a pre-reformer reaction unit is provided, upstream of the fired reformer reaction unit 5, and - if present -upstream of the parallel heat exchanger reformer outside the radiant section 12. The use of one or more pre-reformer units, usually one or more adiabatic pre-reformer units, to partially perform the reforming reaction (before preheating the pre-reformed mixture to the inlet temperature of the main reformer), is advantageous to unload the duty of the reforming reaction. In the pre-reforming, generally a minor part of the hydrocarbon is converted, whereby -amongst others - CO is formed.

The mixture to be fed into the reformer (or pre-reformer(s) in case a pre-reformer is used) usually at least substantially consists of hydrocarbon and the further reactant.

The use of steam as a further reformer reactant is generally known in the art, and described also in detail in the above cited prior art. Alternatively, instead of the addition of steam (3), part of the steam or the complete steam quantity can be replaced with carbon dioxide. Resulting in a reforming section feed (4) consisting of the hydrocarbon feedstock, carbon dioxide and possibly steam. The use of carbon dioxide for the reforming reaction is known in the art ad dry reforming (DRM). The skilled person will be able to determine suitable conditions based on the teaching in the present disclosure, common general knowledge and e.g. Mohamad H A, A mini-review on CO2 Reforming of Methane, Progress Petrochem. Sci. 2(2) PPS.000532.2018.

Steam and hydrocarbon feed may be fed in ratio's known in the art. Usually the ratio hydrocarbon to steam fed into the reformer reaction unit is at least 2.0 mol/mol, preferably at least 2.5 mol/mol, in particular at least 3.0 mol/mol. Usually the ratio hydrocarbon to steam fed into the reformer reaction unit is 5.0 mol/mol or less, preferably 4.0 mol/mol or les, more preferably about 3.0 mol/mol or less. A ratio of hydrocarbon to steam ratio of 2.5 to 3.0 mol/mol is generally preferred as this results in the minimized hydrocarbon consumption and CO2 emissions.

In particular if carbon dioxide is used as essentially the sole further reformer reactant, the ratio of hydrocarbon to CO2 usually is at least about 2 mol/mol, preferably at least about 2.5 mol/mol, in particular about 3.0 mol/mol or more. In particular if carbon dioxide is used as essentially the sole further reformer reactant, the ratio of hydrocarbon to CO2 usually is 6 mol/mol or less, preferably 5 mol/mol or less, in particular about 3 mol/mol. If a mixture of further reactions is used, suitable and preferred ratios can be calculated based on the ratio steam/CO2 and the above ratios, wherein about stoichiometric ratios are particularly preferred.

In accordance with the invention, the required fired duty for driving the reforming reactions in the reformer reaction unit is reduced by applying a recuperative reformer reaction unit 5 located in the radiant section 12 and/or a parallel heat exchanger 22 reforming reactor outside the radiant section 12 of the reformer system. As already explained, such reduction in fired duty would not be achieved by extra preheating of the feed before entering the reformer reaction unity.

Both embodiments wherein a heat-recuperative reformer reaction unit (5;in the radiant section 12) is provided and embodiments wherein two or more reformer reaction units 5,12 are provided in parallel, allow for high severity reforming, compared to standard reformer systems. The presence/use of a heat-recuperative reforming reaction unit as a fired reformer reaction unit 5, especially in combination with structured catalyst present therein, allows for higher throughput due to increase heat transfer and lower pressure drop as well as the heat recovered, in comparison to a standard fired reformer system and system with (non heat recuperating reformer reaction units in parallel). Additionally, it avoids temperature limitations for materials thereby allowing catalyst outlet temperature of far above 900 degrees C (typically up to 1000 degrees C), whilst remaining efficient. The advantage of the high outlet temperature is more conversion of CH4 and thus a lower carbon footprint and more hydrogen produced.

In recuperative reforming, internal heat is recovered inside the reformer reaction unit 5. Advantageously, the heat-recuperating reformer unit, comprises an outer reactor channel 36 and an inner heat recovery channel 32, configured to exchange heat with the outer reactor channel, said heat recovery extending coaxially inside the outer reactor channel; said inner and outer channel together are also referred to in the art as forming a reformer tube. The outer reactor channel generally contains a catalyst, usually a catalyst bed, catalysing the reaction between the hydrocarbon and the water under formation of reformate. Suitable catalysts are generally known in the art. Particularly suitable is a nickel catalyst ( a catalyst comprising metallic nickel or nickel oxide), which usually is provided on a ceramic support, e.g. alumina. The outer reactor channel has a feed inlet 30 via which, during use, the hydrocarbon and the water are brought in contact with the catalyst (fed through the bed) and an outlet 31 for reformate, which inlet and outlet are located at opposite ends of the outer channel containing the catalyst. At least a substantial part of the inner channel 32, 34 and at least a substantial part of the outer channel are separated via a heat-conductive partition (P), allowing heat transfer from the inner channel (reformate passage way 32, 34) to the outer channel (catalyst zone 36) by heat conduction for at least a substantial part, directly via said partition (P), such as a heat conductive wall. Thus, heat is transferred internally inside the reformer reaction unit without transfer of heat to another gaseous medium than the medium present in the catalyst zone, let alone another gaseous medium outside the reformer reaction unit such as flue gas in the radiant section or in a convection section. A further part of the required heat for the endothermic reforming reaction is provided by firing of fuel in the radiant section 35. During use, the reformate is fed from outlet 31 into the inner channel 32, 34. Heat is then transferred from the reformate flowing through the inner channel to the contents of the outer reactor channel and reformate leaves the heat-recuperating reformer unit via a gas outlet 33.

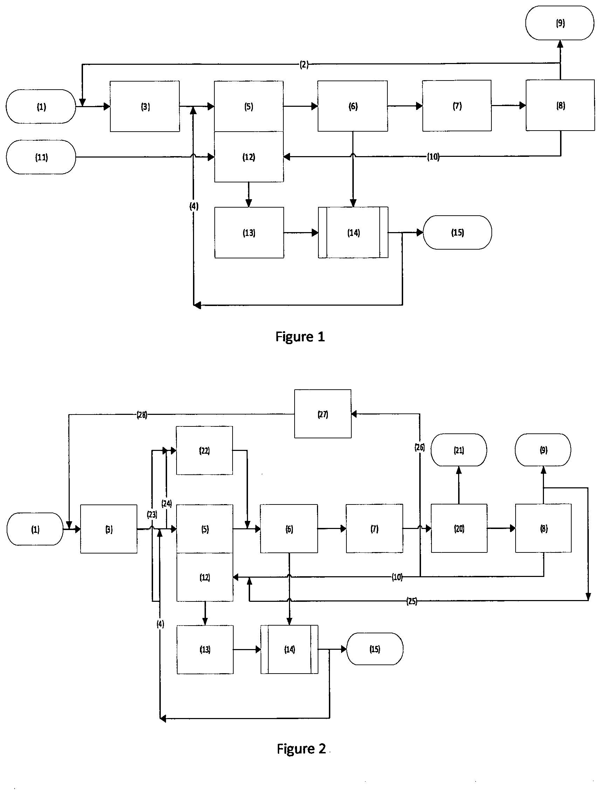

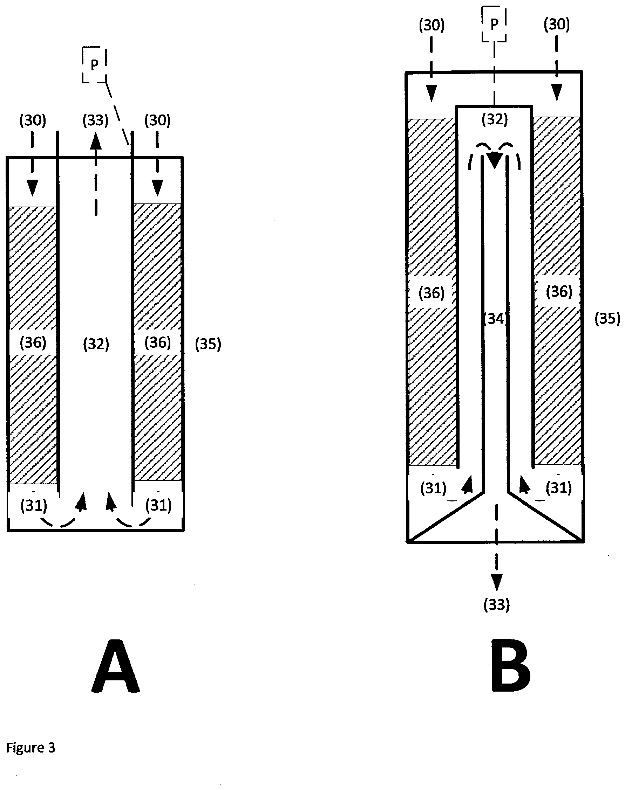

Figure 3 schematically shows two concepts of preferred recuperative reforming reaction units. In recuperative reforming, the reformer inlet gas 30 usually has an temperature at the inlet in the range of about 350 to about 700 degrees C, preferably in the range of 500 to 700°C. Heat is supplied by both the internal heat recovery 34 and by firing of fuel in the radiant section (35 in Figure 3, cf. 12 in Figures 2 and 4) . The recuperative reformer reaction unit is usually configured (and operated) to provide a temperature in the range of about 700 to about 1000 °C, preferably of 900°C or higher, of the reformate gas at the outlet 31 side of the part of the unit provided with catalyst (the outlet-end of the catalyst bed) The reformer configuration of the present invention allows a robust operation, also at a high reaction temperature (see also below). The higher the outlet temperature, the more of the methane reacts to H2 and oxides or carbon, ultimately CO2 (which is captured), and thus lower hydrocarbon consumption to produce the same amount of hydrogen. A higher temperature increases firing demand, but as -in accordance with the invention it is possible to perform most (or in some embodiments essentially all) of the firing with hydrogen a savings in CO2 emissions is still feasible, also when operating at about 1000 degrees C. Although a high methane conversion rate is advantageous, it is not necessary in a process according to the invention that all methane is consumed in the reformer system.

The pressure in the reformer reaction system (comprising fired tubular reformer, heat-exchanger reformer, and optionally an autothermal reformer unit) can be chosen within a known range, generally between 0.1 and 10 Mpa, e.g. depending on the desired product pressure. Advantageously the pressure in a process according to the invention is at least 0.2 Mpa, in particular at least 0.25 Mpa. Usually, the pressure in the reformer reaction zone is 5 Mpa or less, preferably 4 Mpa or less, more preferably in the range of 0.2-4.0 Mpa.

The hot reformed gas then flows counter-currently 34 back and cools down the gas by supplying heat to the reacting gas and reformer product. The outlet temperature of the reformate optionally makes a further pass through an innermost channel 32, typically co-current with the catalyst. The temperature of the reformate is usually about 30-100°C above the inlet temperature when exiting the reformer tube 33,

Concept A in Figure 3 (left hand) shows a reformer tube with two passes, where the inlet reacts through a catalyst bed and hot gas is collected and flows countercurrently while exchanging heat with the reaction zone. The inlet and outlet of the gas are thus at the side of the tube. Concept B of Figure 3 (right hand) adds a third pass where the cooled gas 32 flows counter currently in an additional inner channel to exit the reformer tube at the opposite side of the inlet 33.

The internal heat recovery significantly decreases the required fired duty of the radiant section 12 and subsequently reduces the need for externally applied fuel 11 and eventually the associated CO₂ emissions. By combining measures in accordance with the invention making at least making use of a recuperative reformer unit or parallel reforming unit and using hydrogen produced in the process of the invention it has been found possible to fully provide the needed heat for producing the hydrogen product from a fraction of the product obtained by converting the hydrocarbon feed. The fuel needed for obtaining the hydrogen-comprising product in accordance with the invention can be a part of said product, can be a combination of tail gas 10 obtained after recovering the hydrogen comprising product 9 in a hydrogen recovery unit 8 and the product gas comprising hydrogen recovered in said unit. It is also possible to obtain the needed hydrogen from another process gas made from the hydrocarbon feed (such as a hydrogen-enriched gas obtained after reformer (directly or further downstream). If desired, a minor part of the fuel (<50 % of the calorific value, in particular less than 25 % of the calorific value) can be provided by an external source (i.e. other than - indirectly - from the hydrocarbon feed) though. In practice this is usually not preferred, in particular not if the external fuel adds directly or indirectly to carbon dioxide emissions.

In addition, the concept of recuperative reforming also enables high severity reforming, because the location of the highest temperature reached by the process, is towards the outlet side of the catalyst (bed) that is not in direct fluid connection with the outlet system manifolds. This latter aspect is an important differentiator with standard steam- or dry reforming reactors having no internal recirculation and where outlet manifold are exposed to the same severe conditions as the outlet of the catalyst bed is exposed to. Such exposure brings challenges and limitations for the mechanical design of the outlet system, that is classically a bottleneck for the design of reformers operating with low methane slip. In short: recuperative reforming design allows for reaching severe reforming conditions (and thus low methane slip) while using sound mechanical concept for the process unit, in particular by reducing the need of additional firing compared to conventional reforming technology.

The application of the recuperative reforming provides a cumulative effect in the reduction of reformer size. The inventors found that this effect is further even further exploited with the invention as the reduction of hydrocarbon consumption is approximately 4% while the reformer size reduces by 9%. Alternatively for a parallel heat exchanger reformer a similar cumulative effect is observed.

The catalyst in a heat-recuperative reformer reaction unit preferably is a structured catalyst. Examples of structured catalysts suitable for use in a steam reforming or dry reforming process or hydrogen plant in accordance with the invention are known per se. The catalyst preferably has an annular configuration. An advantage of an annular configuration is the ability of the reforming tubular reactor to process higher feedstock flow rate and recycled gas flowrate and therefore allows for avoiding the increase in size of the reformer, which may be a steam reformer or a dry reformer, compared to the conventional reforming process. Advantageously, the catalyst structure is pre-formed into an annular structure or composed of several pre-formed parts, together forming an annular structure. Advantageous catalyst structures for a reformer reaction system in accordance with the invention can be based on the contents of PCT/EP2020/068035.

Thus, in an advantageous embodiment, the heat recuperative reformer comprises a catalyst tube assembly, comprising
- an outer reactor tube having an inlet end and an outlet end opposite the inlet end, and including an inwardly protruding element;
- a centering assembly including an inner tube having an inlet end and an outlet end;
- a tubular boundary having a closed end and an open end;

wherein the tubular boundary is configured to extend substantially coaxially within the outer reactor tube and substantially coaxially around the inner tube, such that the catalyst tube assembly includes a first annular channel between the outer reactor tube and the tubular boundary, and a second annular channel between the tubular boundary and the inner tube, wherein the second annular channel is in fluid connection with the first annular channel near the open end of the tubular boundary, and in fluid connection with the inner tube at the closed end of the tubular boundary
wherein the outlet end of the inner tube includes at least one sealing member configured to be in sealing engagement with the inwardly protruding element of the outer reactor tube.

The structured catalyst may be a catalytic material coated on a monolith or corrugated plate, enhancing the heat transfer properties in the inside of the tube. Examples are shown in e.g., US2010/0254864. Examples of annular catalysts in a recuperative reformer tube are shown in WO 97/26985. The annular reactor consists of a U-tube reactor (or Bayonet type reactor) that contains a riser tube in its central part. The catalyst is arranged in the annular space and the process gas flows back upwards in the central riser. The process gas is collected on the top side . Both process gas inlet and outlet system are therefore on the top side of the reactor assembly. WO 97/26985 also shows a tube surrounding the U-tube reactor (or Bayonet type reactor) where the combustion flue gas are circulated and provide the heat necessary for the reforming reaction. The combustion occurs in an externally located burner and the flue gas are brought in contact with the reactor via a jacketed cylindrical chamber surrounding the reactor.

A further, example is shown in US2007/0025893. It shows a reactor design with stackable structures placed in annular configuration inside the reforming reactor.

Further, the recuperative reformer reaction unit may e.g. be based on EP-A 0 725 675, US 5,162,104, US 5,219,535 or WO 2018/077969. The recuperative reformer reaction unit is advantageously based on a catalyst tube design described in WO2018/077969.

Thus, with reference to claim 1 and Figure 1 of WO2018/077969, advantageously the recuperative reformer reaction unit comprises a catalyst tube for regenerative catalytic conversion of process gas in an industrial furnace comprising
- a catalyst tube inlet for gaseous hydrocarbon feed to enter the catalyst tube and a catalyst tube outlet for reformate s to exit the catalyst tube, which inlet and outlet are located at opposite ends of the catalyst tube;
- an outer reactor tube;
- an inner tube that extends coaxially inside the outer reactor tube;
- a boundary located between the inner wall of the outer reactor tube and the outer wall of the inner tube;
- a first annular channel for catalytically converting the hydrocarbon feed in the presence of water, which channel is defined by the inner wall of the outer reactor tube and the outer wall of the boundary, which channel contains the catalyst;
- a second annular channel for reformate to flow counter-currently or co-currently to the feed flowing through the first annular channel, which second annular channel is defined by the inner wall of the boundary and the outer wall of the inner tube;
- an inlet barrier at the inlet end of the catalyst tube for preventing gas to exit the outer reactor tube from the second annular channel and inner tube (at the inlet end of the catalyst tube;
- an outlet barrier at the outlet end of the catalyst tube for preventing gas to exit the outer reactor tube 1,11 from the first annular channel and from one of the second annular channel and the inner tube, while allowing gas to exit the outer reactor tube from the other of the second annular channel and the inner tube;

wherein the inner tube, first annular channel and second annular channel each have an opening at the inlet side of the catalyst tube and an opening at the outlet side of the catalyst tube,
wherein the catalyst tube inlet is fluidly connected with the opening of the first annular channel at the inlet end of the catalyst tube; the opening of the first annular channel at the outlet end of the catalyst tube is fluidly connected with either the opening of the second annular channel at the outlet end of the catalyst tube or the opening of the inner tube at the outlet end of the catalyst tube; the opening of the second annular channel at the inlet end of the catalyst tube is fluidly connected with the opening of the inner tube at the inlet end of the catalyst tube; and either the opening of the inner tube at the outlet end of the catalyst tube or the opening of the second annular channel at the outlet end of the catalyst tube is fluidly connected with the catalyst tube outlet.

With respect to WO2018/0077969 it is observed that this document does not specifically teach to reduce CO₂ emissions in a steam reforming or dry reforming process as is achievable by the present invention. The inventors found that in accordance with the present invention, a cumulative effect is achieved on the reduction of hydrocarbon feed and CO₂ emissions. The recuperative reforming reduces the firing, requires less hydrogen to be formed in the reformer and therefore the firing is again less and thus the reduction effect of recuperative reforming is significantly increased.

Alternatively or in combination with the recuperative reformer unit 5, a parallel heat exchanger reformer unit 22 is provided in a process or plant according to the invention. The heat exchanger reformer may be based on a heat exchanger known in the art, e.g. from WO2018/104526.

The parallel reformate or part thereof and the reformate from the fired reformer or part thereof that has been used as heat exchange medium in the heat-exchanging medium passage way (HEP) are usually combined downstream of the parallel reformer catalyst zone (CZP) and downstream of the heat exchanging medium passage way (HEP), thereby forming a combined reformate gas 39. The combining can take place downstream of the parallel reformer catalyst zone, yet inside the parallel reformer unit or outside the parallel reformer unit.

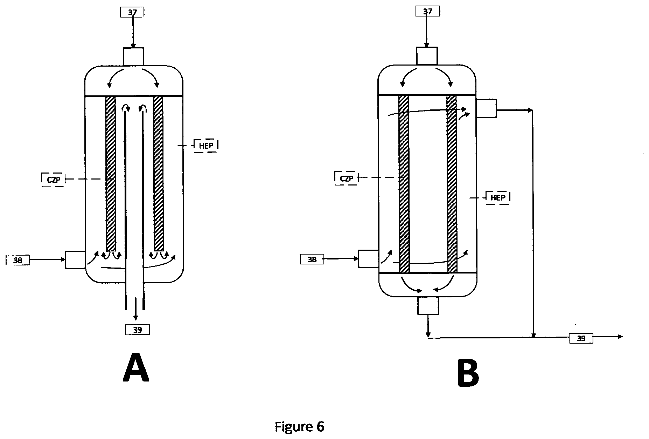

Figure 6A schematically shows a design for combining inside the parallel reformer. This makes the mechanical design simpler, but could require an increase in heat-exchange area due to lower temperature difference. Figure 6B schematically shows a design for combining inside the parallel reformer outside the reformer, which can add to the complexity of the design, but can reduce the required heat-exchange area. As illustrated in Figures 6A and 6B the parallel heat exchanger reformer comprises a first passage way for the hydrocarbon plus further reacted to be subjected to the reforming reaction. This passage way comprises an inlet for the hydrocarbon-further reactant mixture (37), a reformer catalyst zone (CZP), and an outlet for reformate from the reformer reaction unit (Figure 6B) or combined reformate from the reformer reaction unit and reformate originating from the primary reformer that has been used as a heat exchange medium. The combined reformate (38) is then typically fed to a down-stream processing unit. The heat exchanger reformer further comprises a second passage way, i.e. a heat transfer passage way (HEP), arranged to transfer heat from the heat exchange medium in the second passage way to the reformer catalyst zone (CZP). Heat exchange medium (38) is hot reformate originating from the primary reformer (and optionally the secondary reformer) entering heat exchanger reformer via an inlet into the second passage way and leaving the parallel reformer via the same outlet as the reformate formed in the heat exchanger reformer (Figure 6A) or via a separate outlet (Figure 6B).

A preferred heat exchanger reformer comprises a vessel having a plate assembly section placed therein comprising of several plates positioned at a distance from each other to provide at least alternating first and second channels between adjacent plates, which vessel comprises a first inlet at a first end of the plate assembly section for supplying a mixture of a hydrocarbon feed and further reactant (steam, carbon dioxide or mixture thereof) to the first channels and causing the mixture to flow in a direction toward a second end of the plate assembly section, which vessel also comprises a second inlet close to the second end of the plate assembly for supplying hot reformer effluent as a heating gas flow to the second channels, wherein the second channels comprise a first and a second section which are connected to each other, wherein the first section is provided for conducting the hot reformer effluent in a direction towards the first end of the plate assembly counter current to the flow of the hydrocarbon feed and further reactant mixture, e.g. steam mixture, in the first channels, and the second section is provided for conducting the hot reformer effluent to flow in cross direction of the first channels, which second channels are connected to a collector outlet for the reformer effluent to leave the heat exchanger reformer at the first end of the plate assembly.

The parallel heat exchanger reformer is installed outside (and in a parallel flow path for the mixture of hydrocarbon feed and steam (or carbon dioxide) of the radiant section 12 of the steam reformer system. The fired reformer reaction unit 5 located inside the radiant section can be a standard reformer reaction unit or a recuperative reformer reaction unit. In a parallel configuration, a part of the feed to the reformer system is split off 24 and sent to a heat exchanger reforming reactor 22 parallel to the fired reformer 5. Heat for the reaction in the parallel (non-fired) heat exchanger reformer 22 is supplied by heat reformer effluent, heat available in the flue gas from the radiant section 12 or another high temperature heat source, generally of at least 850 degrees C, in particular of 900 degrees C or higher.

An advantage of a parallel heat exchange reformer is that, during use, it supplies part of the duty required for hydrogen production, thereby reducing the required radiant duty in the reformer (provided in radiant section 12) and subsequently the required fired duty. Generally, the outlet temperature at the catalyst zone (bed) in the heat exchanger reformer unit is lower than in a fired reformer (typically the main reformer, i.e. receiving more than 50 % of the feed-further reactant mixture, in particular feed-steam mixture) due to the temperature difference (the driving force) necessary for the heat exchange process to take place The outlet temperature of the catalyst bed is typically in the range of 750 to about 850 degrees C, with the proviso that it is lower than the outlet temperature of the fired reformer 5, usually at least about 20 degrees C lower. The pressure in the parallel reformer 22 outside the radiant section is generally about equal to the pressure in the fired reformer. Accordingly, the methane slip is typically higher than in a reformer. To decrease the methane slip, additional steam 23 or carbon dioxide or a mixture thereof can be added at the feed of the parallel heat exchanger reactor 22 to drive the reforming reaction towards hydrogen production. Thus, the ratio of further reactant (steam, carbon dioxide, mixture thereof) to hydrocarbon feed, does not have to be the same in different reformer reaction units. The reformer effluent from the heat exchanger reformer unit 22 is typically combined with the reformer effluent from the fired reformer unit 5 before further processing, which generally comprises a further reaction in a entering the shift section 7, see also below. Because the heat exchanger reformer is parallel to the fired reformer and reduces the required duty of the fired reformer (when comparing at equal hydrogen output), the reformer size can be reduced with the same throughput per tube. When using a parallel configuration, usually about 10 to about 30 wt.% of the hydrocarbon feed, preferably 15 - 25 wt.% is fed to the (non-fired) heat exchanger reformer reaction unit 22. A higher split ratio will unload the reformer further, but reduce the driving force for the heat exchanger reformer, resulting in a increasingly larger parallel reformer exchanger.

The reformate is typically cooled 6 before further processing. This can be done in a manner known per se. Particularly useful is a waste heat boiler 6 wherein, during use, steam is produced using heat from the reformate stream. Steam is further preferably generated using heat from the flue gases from the radiant section 12. This is generally done in a heat exchanger 14 configured in a heat-exchanging configuration in the convection section 13. The produced steam 4, 23 or part thereof is used as the water to be reacted with the hydrocarbon feed to be subjected to reaction in the reformation. In principle, produced steam may also be combined with reformate prior to the shift reactor zone 7 or fed to the process gas inside the shift reactor. However, good results are achieved without adding steam to the reformate or inside the shift reactor zone. The process or plant according to the invention can be adapted to be completely self-sufficient in steam production for the process or based with export and/or import steam 15. The lower the required steam production inside the unit battery limits, the more heat integration can be applied and thus lower firing requirement.

The reformate, typically after cooling, is usually fed into a water gas shift reactor 7, wherein carbon monoxide, reacts with water to form further hydrogen and carbon dioxide. This is usually done in the presence of a shift catalyst, which is known per se, e.g. an iron- or copper-based shift catalyst. Thus, the treatment in the shift reactor zone results in a shift reactor product (shift reactor process gas) having an increased hydrogen and carbon dioxide content compared to the reformate. The shift reactor zone design and reaction conditions may in principle be based on known technology, e.g. as described in the prior art cited herein.

The shift reaction zone is generally operated at a lower temperature than the reformer system. Generally, the temperature during shift reaction is in the range of about 190 to about 500 degrees C. The type of shift applied is generally indicated in three categories based on the outlet temperature of the catalyst. High temperature shift with an inlet of 300-400 degrees C and outlet of 350-500 degrees C; medium temperature shift with an inlet temperature of 190-230 degrees C and an outlet temperature of 280-330 degrees C and low temperature with an inlet temperature of 180-230 degrees C and an outlet temperature of 200-250 degrees C. As the water gas shift reaction is exothermic, the temperature rise is larger for a higher CO concentration at the inlet.

For a low carbon dioxide emission, it is advantageous to operate the shift reactor zone under conditions wherein the water gas shift reaction (CO + H2O 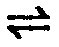 CO2 + H2 ) is shifted towards the formation of H2 and CO2. As the reaction is exothermic, this favored by a low temperature. Preferably, a high temperature shift followed by low temperature shift is applied in a process according to the invention to maximize the CO conversion to H2 and CO2 (which CO2 is thereafter captured) and thus minimize the CO2 emissions. Alternatively, only a high temperature shift, a medium temperature shift reaction or an isothermal shift reaction (a cooled shift reactor at a constant temperature) can be applied).

Advantageously, at least the fired reformer reaction unit (5) is operated at a relatively high temperature, preferably in the range of 850-1000 degrees C, more preferably in the range of 900-1000 degrees C (at the outlet end of the catalyst) and a deep shift conversion (resulting in a high CO conversion to CO2), typically with an outlet temperature of the shift reactor in the range of 200-250 degrees C is applied in the shift reactor zone to maximize the conversion of feed to hydrogen and thereby reducing the CO2 emissions as well as the hydrocarbon consumption as per invention.

Usually, in accordance with the invention, the reformate (gas stream coming from the reforming system) or the shift reactor process gas (gas stream coming from the water gas shift reactor) (the latter when - as is usual - a treatment in a shift reactor zone is carried out) is subjected to a carbon dioxide removal treatment 20. Herein, the carbon dioxide content in said reformate or shift reactor process gas is reduced to form a carbon dioxide-depleted process gas (carbon dioxide-depleted product) and a carbon dioxide side-product. Capturing the CO2 can be accomplished in a manner known per se, e.g. as described in the cited prior art. Advantageous techniques are temperature swing adsorption (TSA), Vacuum Swing adsorption (VSA), Pressure Swing Adsorption (PSA), Sorption enhanced Water-Gas shift (SEWGS) and amine-based adsorption/stripping process. Typically, amine-based adsorption/stripping process is preferred where all duty for the amine reboiler is supplied by the process gas and thereby minimizing the external heat input. Capturing CO2 from the process gas (reformate or shift-reactor product) is preferred as this is the least energy intensive, as the process gas is available at high pressure (typically about 20-35 barg) and therefore has a high driving force for the separation of CO2. The captured CO2 is sent as a high purity stream to the battery limit (outgoing stream from the plant) and could be used for other process, food and beverage industry as well as for storage as in Carbon Capture for Utilization and Storage (CCUS). Further, captured CO2 may be used as a reformer reactant, when applying a dry reforming process. This may be a reformer process different from the present reformer process; however, it is also possible to recycle a gas enriched in carbon dioxide obtained in the carbon dioxide removal treatment, directly or after further purification to higher carbon dioxide content, to one or more reformer reaction units 5, 22 in a process according to the invention.

Typically, from 70 up to 99% of the CO2 is removed from the process gas, although technically 99.99+% removal of the CO2 is possible; this corresponds to a reduction of the overall CO2 emissions of the hydrogen production plant by about 30-60%.

It is noted that CO2 capture on conventional reforming with CO2 removal in the flue gas is also known in the art, but this is very energy intensive and requires complicated technology compared to the present invention, especially when aiming to remove the carbon dioxide in a stream at least substantially. As illustrated in the examples, in accordance with the present invention it is possible to achieve more than 98% reduction in CO2 emissions, by capturing it from a process gas (upstream of a unit wherein hydrogen product gas is obtained or in a tail gas, i.e. the waste gas, from a hydrogen recovery unit) without the requirement of CO2 capture from the flue gas. Also from a plant-size perspective it is advantageous not to use/provide a capturing device configured to remove carbon dioxide from flue gas. Still, in an (atypical) embodiment wherein the flue gas in a process according to the invention comprises a significant amount of carbon dioxide, additionally carbon dioxide capture from the flue gas is feasible.

As will be understood by the skilled person, the reformate, the shift reactor product respectively the carbon dioxide-depleted product still contain substantial amounts of components other than hydrogen. Accordingly, generally a hydrogen recovery 8 is carried out in order to obtain the hydrogen comprising product gas 9 of satisfactory purity, usually at least about 95 mol %, preferably at least 98 % more preferably at least 99 mol. %, in particular at least 99.9 mol %. The purity may be 100 % or less, in particular 99.9999 %or less, 99.999 % or less, 99.99 % or less, 99.9 % or less, 99.5 % or less, 99.0 % or less, dependent on the needs and technology used. Suitable techniques to recover hydrogen recovery from a process gas (such as reformate, shift reactor product respectively the carbon-dioxide depleted product) can be based on known technology. In a particularly preferred embodiment, a pressure swing adsorption (PSA) unit is provided. PSA allows the production of hydrogen gas that is essentially free of other components. In a further preferred embodiment, a hydrogen-retaining membrane separator is provided. In a further preferred embodiment, an electrochemical compressor is provided. Electrochemical compressors can be used to obtain high purity high pressure hydrogen-comprising product gas 9.

The shift reactor product is subjected to a carbon dioxide removal treatment 20 to obtain the carbon dioxide-depleted product and the gas enriched in hydrogen is recovered from the carbon dioxide-depleted product carbon-dioxide using the pressure swing adsorption treatment 8, the hydrogen-retaining membrane 8 or the electrochemical compressor 8, thereby obtaining the hydrogen-comprising product gas, of which part is used as fuel in the radiant section of the reformer system. In a further preferred embodiment, the carbon dioxide-depleted product is separated into the gas enriched in hydrogen, preferably the hydrogen-comprising product, having an increased hydrogen content compared to the carbon dioxide-depleted product and a tail gas (waste gas) having a reduced hydrogen content compared to the carbon dioxide-depleted process stream, said tail gas comprising hydrocarbon and a first part of which tail gas product is used as fuel in the radiant section, preferably after mixing it with other fuel component or components, such as hydrogen-comprising product. A second part of the tail gas (waste gas stream from hydrogen recovery unit 8) is compressed to a pressure between 1 and 5 Mpa, preferably 2-3Mpa and fed to a hydrogen separation unit 40 separating the tail gas into a hydrogen rich permeate stream 42 at low pressure (i.e. at a pressure comprised between 0.1 and 1 MPa) and a hydrocarbon rich retentate 41, comprising of CH4, CO and some H2 and usually an inert such as nitrogen, at high pressure (i.e. at a pressure comprised between 1 and 4Mpa).

Hydrogen product 9 obtained in the hydrogen recovery unit 8 can also be used to provide fuel for firing in the reformer. Further, the hydrogen product can be used to provide hydrogen to a hydrocarbon feedstock pre-treatment 3, typically hydrodesulphurization. For such recycle, typically 0-5 % of the produced hydrogen product is used, in particular 0.5-3 %, dependent on the quality of the feed and whether another source of hydrogen is used or not.

In addition to the hydrogen-comprising product 9, usually at least substantially consisting of hydrogen, a hydrogen recovery step results in a tail gas 10, which may still contain hydrogen, although typically in a reduced concentration, relative to the process gas prior to having been subjected to hydrogen recovery.

Part of the hydrogen-comprising product 25 obtained in the hydrogen recovery unit 8 is advantageously fed to the radiant section 12 where it is combusted. Accordingly, in a preferred embodiment, a pressure swing adsorption unit or a hydrogen-retaining membrane separator is used for recovering the hydrogen-comprising gas product and part of said gas product 25 is used as fuel in the radiant section.

The second part of the waste gas stream 26 from hydrogen recovery unit 8 is compressed and treated in the hydrogen-permeating membrane separation system 40. The hydrogen rich permeate stream from the hydrogen-permeating membrane separation system 40 provides a significant amount of the fuel for the radiant section, typically 20-30%.

Alternatively or in addition to using part of the hydrogen product 25 as a fuel, the crude hydrogen 43 can be fed to the hydrogen-permeating membrane separation system, forming a mixed feed of compressed waste gas stream 28 and crude hydrogen 43. The hydrogen rich permeate stream 42, consisting essentially of hydrogen, is used as the sole fuel for the radiant section. The crude hydrogen flow to the separation unit is varied to match the firing requirement, while the permeate stream 42 pressure is controlling the firing. In particular for this aspect of the invention it is beneficial to have a first tail gas compression step up to the hydrogen-permeating membrane unit's operating pressure (typically 5-15 bar), and a second compression step of the hydrocarbon rich retentate stream 41 compressing to the required pressure upstream the reformer. Because the volumetric flow rate of hydrocarbon-rich retentate stream 41 is much reduced in comparison to compressed waste stream 28, this will significantly reduce the total required compression power and total compressor capital cost.

The hydrocarbon rich retentate from the hydrogen-permeating membrane separation system may still contain hydrogen gas. It may further contain residual non-converted hydrocarbon from the feedstock, in particular methane, and carbon monoxide formed in the reformer system or shift reaction zone respectively. Accordingly, all or part of the hydrocarbon rich retentate 41 may be recycled from the hydrogen-permeating membrane separation system 40 and combined with the hydrocarbon feed upstream of the feed purification 3 or reformer or with reformate before introduction in the shift reactor zone. This is schematically shown in Figure 5.

The recycle of the hydrocarbon-enriched retentate at reaction conditions in a reformer unit (5, 22) reduces greenhouse gas emissions. When feeding tail gas comprising CO and/or hydrocarbon (in particular methane) to the radiant section for combustion it generates CO2 that is typically emitted into the atmosphere, whereas the CO2 generated from the recycled tail gas can be captured in the carbon dioxide recovery unit and stored or be put to further use. The tail gas is compressed in the compressor 27, since the tail gas pressure is usually considerably lower than the pressure of the stream with which it is to be combined, e.g. more than 10 times lower. E.g. tail gas pressure from a PSA may be about atmospheric or slightly higher, e.g. about 0.3 bar, compared to a feed pressure in the range of about 25 to about 40 bar.

A minor part of the waste gas stream 10 from hydrogen recovery unit 8 (tail gas) may need to be purged, if inert gas (in particular nitrogen) builds up due to recycling. This is accomplished by feeding a part of the tail gas to burners of the radiant section, where combustible components serve as fuel and the inert gas is purged. Usually less than 10 % of the tail gas is needs to be purged (fed to the radiant section, via line 10) in this embodiment. The maximum that is advantageously recycled is generally based on when an unacceptable build-up of gasses occurs. In the absence of such build-up, essentially all of the tail gas is advantageously recycled, as all heat needed for firing the reformer can be provided by the hydrogen product gas 25 obtained in the hydrogen recovery unit 8.

The invention of applying a hydrogen-permeating membrane separation system 40 in the tail gas is in particular advantageous effect for further reduction of carbon dioxide emissions/footprint, but will also increase the reformer capacity requirements, since there will be a larger flow of feed (including recycle stream through the reformer reaction units. Thus, in a process according to the invention, the fraction of the tail gas from the hydrogen recovery unit 8 that is recycled can be any fraction from 0 - 100 % ; and an optimum can be chosen dependent on making an assessment of the needed/desired CO₂ emission reductions, the needed/desired global CO₂ footprint reduction and what is a desired or acceptable size of the reformer system (or plant as a whole). The benefit of combining recuperative reforming (or parallel reforming) with tail gas recycle with respect to lowering CO2 emissions becomes bigger with larger recycle flowrate. Thus, for an additional beneficial effect on CO2 emissions, a tail gas recycle of at least about 10 %, preferably at least 25 %, more preferably at least 40 %, in particular at least 50 % can be used. Depending on acceptable requirements of the reformer system, the tail gas recycle can be up to 100%, up to 80 %, up to 60 %, up to 40 %, or up to 20 %.

As also indicated above, the downside of additional firing with hydrogen product as such requires more feed and would - without adequate measures as described herein - consequently result in more tail gas recycle again requiring more firing and thus even more feed. However, the present invention allows a significant net hydrocarbon conversion to hydrogen-comprising product 9 that can be taken from the process by further reducing the firing requirement. The hydrogen rich permeate stream 42 reduces the tail gas recycle stream through the reformer unit and thus reduces the required heat input in the reformer section. Also the reduced hydrogen partial pressure in the reformer unit increases the conversion of hydrocarbons to hydrogen. The hydrogen rich permeate further provides up to 50%, more typically 20-30%, of the fuel for the radiant section. This reduces the required hydrogen product for firing further. This is achieved in particular with the recuperative reforming tubes or heat exchange reformer to both minimize the firing duty requirement in the reforming process and by further combining CO2 removal from process gas (reformate and/or shift reactor product) to maximize the recovery of CO2 from the process gas resulting in a highly efficient low carbon footprint process respectively hydrogen plant. Additionally and advantageously, the firing is reduced significantly by the internal heat recovery thereby reducing the need for firing part of the hydrogen product and thereby thus further reducing the absolute amount of feed and tail gas to be compressed and the hydrocarbon rich retentate stream for the recycle further for an equal hydrogen output as compared to technology not using the recuperative reforming or using parallel reformer units in accordance with the invention. The retentate recycle 41 results still further in lower firing requirement. This combined effect results in an unexpected significant reduction in hydrocarbon feed consumption compared to the same process respectively installation without recuperative reforming or parallel reformers respectively. Also, a dry reforming process, comprising reducing firing duty in combination with recovery of CO2 in accordance with the invention also allows for an unexpected reduction in hydrocarbon feed consumption compared to the same process respectively installation without recuperative reforming or parallel reformers respectively.

Thus, in a particularly preferred embodiment of the invention, the combination of the reformer design (recuperative and/or the parallel arrangement with a heat exchanger reformer reaction unit), CO2 removal 20, tail gas recycle 28 from the hydrogen recovery unit 8, with a hydrogen-permeating membrane separation system 40 in the tail gas to extract a major part of hydrogen from the tail gas as hydrogen rich permeate 42 used for firing in the radiant section 12, where the hydrocarbon rich retentate stream 41 is recycled and hydrogen product firing 25 of the radiant section 12 of the reformer system allows in a reduction of CO2 emissions from a reformer plant, in particular from a steam reforming plant, of about 99 % or more, in particular while minimizing the hydrocarbon feed consumption (for generation of fuel for the radiant section of the reformer system); at least in certain embodiments, without the requirement of a purge stream from the tail gas a reduction of more than 99.9% is feasible, making it almost a net zero CO2 emissions plant.

As follows from the above, hydrogen used as fuel in the radiant section or recycled to be combined with the hydrocarbon feed can be part of the hydrogen-comprising product produced in a process according to the invention, advantageously after recovery unit 8 of the product from a carbon dioxide-depleted product obtained from a carbon dioxide recovery unit 20. It is however also possible to provide an(additional) hydrogen recovery unit at an upstream location in the hydrogen production plant. Advantageously an (additional) hydrogen recovery unit, is configured to recover a hydrogen enriched gas from the reformate and positioned between the reformate outlet of the reformer system and the feed inlet of the shift reactor zone. This has the additional effect of reducing the reformate's hydrogen concentration, which can help to draw the shift reactor towards the production of hydrogen and thus further reduce the hydrocarbon consumption and maximize the CO2 capture ultimately resulting in lower CO2 emissions.

Such effect may also be achieved by positioning a hydrogen recovery unit in between two shift reactor sections of a shift reactor zone comprising two or more shift reactor units.

Another option is to provide an (additional) recovery downstream of the shift reactor zone 7, which may be positioned upstream or downstream of a carbon dioxide recovery unit 20.

If hydrogen enriched gas is used as fuel or recycled, it can generally have a lower hydrogen concentration than is desired for the final hydrogen product Accordingly, less stringent recovery conditions resulting in a lower hydrogen purity can suffice. Particularly suitable is a hydrogen-selective membrane separator. A hydrogen product stream from a methanation unit can also be used for firing in the reformer.

Next, the invention is illustrated by the following Examples.

### Examples

The table below illustrates the typical data for a hydrogen unit based on SMR technology at a capacity of ^{~}25,000Nm3/h. The operating results shown are based on natural gas feed and fuel containing approximately 1.1 vol-% nitrogen. Comparative Case 1 is based on a typical hydrogen plant scheme with a single stage air preheat of approximately 250°C against flue gas and no CO2 removal unit. Steam to carbon ratio is 3.0, a high temperature shift reactor with inlet of ^{~}330°C, a pre-reformer, a PSA recovery of ^{~}88% of hydrogen and boiler feed water (BFW) import. This is a typical hydrogen plant flow scheme as per reference Figure 1, where the product hydrogen has 500 ppmv Nitrogen in the hydrogen product.

Reference Case 2 has the same capacity as Case 1, but high air preheat up to ^{~} 550°C, a low temperature shift reactor with CO2 removal and 90% PSA recovery. Recuperative reforming is applied. The heat recovered in the reforming tubular reactor is ^{~} 200°C, i.e. the outlet temperature of the reformer tube is ^{~} 200°C lower than the catalyst outlet temperature. Hydrogen product is applied for firing as indicated in Figure 2. Additionally instead of using hydrogen product recycle (line 2) PSA tail gas is compressed and recycled (26, 27, 28) to the feed as indicated in Figure 3. A purge of 10% of the tail gas is applied to avoid accumulations of nitrogen in the system resulting from the feed natural gas containing approximately 1.1 vol-% nitrogen. An additional benefit is that the PSA tail gas recycle contains sufficient hydrogen for the hydrodesulphurization unit (3) to eliminate the requirement of a separate recycle hydrogen stream.

Case 3 (according to the invention), is exactly the same process configuration as Reference Case 2, except that a hydrogen-permeating membrane separation system is added to the compressed recycle waste stream. The hydrogen rich permeate is used for firing in the reformer and the hydrocarbon rich retentate is fed upstream the reformer. This case is represented figure 4. In this case, note there is no autothermal reformer unit 50 (contrary to figure 4) because this unit is optional.

Results are shown in Table 1.

**Table 1**

| | **CASE #:** | | |
|---|---|---|---|
| | **1** | **2** | **3** |
| Feed [kg/h] | 5,528 | 6,474 | 6,264 |
| Fuel [kg/h] | 1,899 | 1,077¹⁾ | 696¹⁾ |
| Total hydrocarbon consumption [kg/h] | 7,427 | 6,474 | 6,264 |
| CO₂ emission [kg/h] | 20,148 | 315 | 257 |
| CO₂ exported [kg/h] | 0 | 17,241 | 16,782 |
| BFW import [kg/h] | 35,455 | 13,529 | 13,529 |
| Export steam [kg/h] | 24,720 | 1,829 | 230 |
| Recycle gas flowrate (in case 2 stream 28 and in case 3 stream 41)[Nm³/h] | - | 5,580 | 1,082⁴⁾ |
| Power consumption² [kWh] | 462 | 3,594 | 3,257 |
| Global CO₂ footprint³⁾ [kg/h] | 20,333 | 1,753 | 1,560 |
| Reduction of CO₂ emissions compared to case 1 | - | 98.5% | 98.7% (-19% vs case 2) |
| Reduction of global CO₂ footprint compared to case 1 | - | 91.4% | 92.3% (- 11% vs. case 2) |
| Reformer size compared to case 1 | Base | 16% larger | 7% larger |

| | | | |
|---|---|---|---|
| 1) Hydrogen product is used for firing. 2) Power consumption including CO₂ compression to 40 barg. 3) Operating global CO₂ footprint including power consumption considering 400gCO₂/kWh footprint for power. 4) Hydrocarbon rich retentate stream | | | |

Table 1 clearly indicates that a significant reduction in CO₂ emissions compared to the base case is achieved with a combination of recuperative reforming, capturing the CO₂ from the process gas, PSA tail gas recycle and hydrogen product firing significantly reduces the CO₂ emissions from the plant by more than 98%. The current invention to apply a hydrogen-permeating membrane recovery unit to the tail gas recycle makes a significant contribution to further reduce the hard to abate CO₂ to close to or more than 99% reduction of CO₂ emission compared to the base case

In addition to this improvement the lower recycle flowrate (The hydrocarbon rich retentate versus the compressed tail gas in case 2 respectively) reduces the required reformer duty and thus reduces the hydrogen product firing and the hydrogen rich permeate stream used for firing further reduces the hydrogen product firing. Combined with the cumulative effect of the recuperative reforming this significantly reduces the amount of hydrogen to be produced for firing from hydrocarbons and results in 4% less hydrocarbon consumption than for the low carbon emissions case.

Surprisingly the 4% reduction in feedstock reduces enables a reduction of 9% of the reformer size due to the cumulative effect of the invention. Similarly, a significant reduction in size of the upstream and downstream equipment in the plant is observed.

Additionally, advantageously the lower recycle flowrate reduces the overall power consumption (mainly for compression) by 10% resulting in a global CO2 footprint reduction of 11%. For the stated specific CO2 emission per power produced this results in a global CO2 footprint reduction of ^{~}93%, while with lower specific emissions for power >98% reduction of global CO2 emissions.

When running the examples with a parallel heat-exchanger reformer in combination with a classical fired reformer (instead of a recuperative reformer), the results with a parallel heat exchanger reformer (not shown above), are very similar to the results shown Table 1. With the exception that there is less steam exported for the same firing, as a higher steam to carbon ratio is required to keep the methane slip low in the heat exchanger reformer which operates at a lower temperature.

The current invention can be optimized on a case to case basis both in new (grassroot) plants as well as in existing plants. The PSA tail gas purge can be optimized based on the nitrogen content in the feed, allowable nitrogen content in the product and the allowable CO₂ emissions. A smaller purge results in higher CO₂ capture rate, a smaller amount of hydrogen product firing and consequently a smaller decrease in reformer size. The purge of the tail gas can be between 0 and 100 %.

The operation of the plant can be completely self-sufficient with a minimal requirement of utilities. I.e. An optimization is possible based on zero export steam and all the required steam for the process is produced internally in the plant. The only utilities consumed are hydrocarbon feed, demineralized water or boiler feed water, power and cooling water. Alternatively, the plant could also be designed with import steam for the process, in still another embodiment, where steam for instance is raised with renewable energy and the heat recovery of the SMR is maximized for lowering the fired duty.

### LEGEND TO THE FIGURES

1 hydrocarbon feed supply
2 hydrogen product recycle to feed purification line
3 hydrodesulphurization/ feed purification section
4 steam line to reforming section
5 reformer reaction unit
6 waste heat boiler (cools syngas from reformer and produces steam)
7 shift reactor zone
8 hydrogen recovery unit (pressure swing adsorption (PSA))
9 hydrogen product gas
10 tail stream passage way from hydrogen recovery unit to radiant /combustion section
11 conventional hydrocarbon make-up fuel supply
12 radiant/combustion section of reformer
13 convection section of reformer
14 steam generator (using heat from 6 and 13)
15 excess export steam
20 CO₂ removal unit
21 CO₂ export stream (high purity)
22 parallel reformer reaction unit
23 steam line to parallel reformer
24 hydrocarbon feed for parallel reformer (+ H2/product gas, PSA tail gas dependent on embodiment)
25 hydrogen make-up fuel for radiant/combustion section 12 of the reformer (part of the product hydrogen from the PSA).
26 tail gas line to compressor
27 compressor for tail gas
28 recycle tail gas from hydrogen recovery unit
30 inlet for hydrocarbon-steam feed mixture into reformer reaction zone (catalyst bed)
31. outlet from the catalyst zone into inner channel of the passage way of reformate through the reformer reaction unit
32. part of inner channel of the passage way of reformate through the reformer reaction unit
33. outlet for reformate from the reformer reaction unit.
34. part of inner channel of the passage way of reformate through the reformer reaction unit
35. radiant section
36. reforming catalyst reaction zone (of heat recuperating reformer unit)
37. Mixed hydrocarbon feed with steam (and/or carbon dioxide) to parallel heat exchanger reformer.
38. Outlet for reformate from the reformer reaction unit
39. Mixed outlet from reformer reaction unit and parallel heat exchanger reformer
40. Hydrogen separation unit (preferably a hydrogen-permeating membrane)
41. Passageway for hydrocarbon rich Retentate to reformer feed
42. Passageway for hydrogen rich permeate to reformer fuel 50. Autothermal reformer unit (optional)
51. Oxygen comprising stream, e.g. air, enriched air or preferably oxygen
52. Outlet of autothermal reformer reformate
P = partition (wall) between primary reformer catalyst zone (outer channel) of primary reformer and primary reformate passage way (part) 32 arranged to transfer heat to primary catalyst zone
CZP= Parallel process-gas heated reformer catalyst zone
HEP= Heat transfer passage way for the parallel heat exchanger reformer where the heat of reaction is supplied by the hot reformate outlet 38

## Claims

1. Hydrogen plant comprising :
- At least one reformer (5) for converting a hydrocarbon feedstock (1) into a gas stream comprising hydrogen, carbon monoxide and at least one hydrocarbon as impurity, said reformer comprising a fired tubular reformer (5), a radiant section (12), a convection section (13) and a heat recovery section (6),
- One water gas shift (WGS) reactor (7) for converting the carbon monoxide of the gas stream into carbon dioxide and hydrogen,
- A carbon dioxide removal unit (20) downstream of the WGS reactor and configured to remove carbon dioxide from the gas stream,
- A hydrogen recovery unit (8) downstream of the carbon dioxide removal unit (20) for producing a hydrogen-enriched gas stream (9) and a waste gas stream (10),
- A passageway for feeding the radiant section (12) of the reformer (5) with a first part (10) of the waste gas stream from hydrogen recovery unit,
- A compressor (27) for compressing a second part (26) of the waste gas stream from hydrogen recovery unit (8),
- A hydrogen-permeating membrane separation system (40) configured to be fed by the compressed second part (28) of the waste gas stream and to produce a hydrogen-enriched permeate (42) and a hydrocarbon-enriched retentate (41),
- Passageway for recycling the hydrogen-enriched permeate (42) in the radiant section (12) of the reformer, and
- Passageway for recycling the hydrocarbon-enriched retentate (41) upstream of the reformer in the hydrocarbon feedstock,
with the reformer (5) comprising a recuperative reformer in the radiant section (12) and/or in parallel a heat exchanger reformer (22), whereby the recuperative reformer is a reformer consisting of one or more more tubular catalyst tubes where the catalyst tubes comprise of an outer annulus with a catalyst bed and whereby the recuperative reformer is configured in such a manner that the heat required for the reforming is provided from the outside by the radiant section as well from the inner tubes/ annulus inside which the reformate formed on the catalyst bed is cooled down to exchange heat to the catalyst and to then exit said tubes at a lower temperature than the catalyst outlet temperature.

2. Hydrogen plant according to claim 1, comprising passageway for feeding the membrane separation system (40) with a part of the gas stream delivered by the carbon dioxide removal unit.

3. Hydrogen plant according to claim 1 or claim 2, wherein the hydrogen recovery unit (8) is a pressure swing adsorption unit, a hydrogen-retaining membrane, a cryogenic recovery unit or an electrochemical compressor.

4. Hydrogen plant according to any one of claims 1 to 3, comprising upstream of the reformer a hydrodesulphurization unit (3).

5. Hydrogen plant according to any one of claims 1 to 4, wherein the hydrogen-permeating membrane separation system (40) comprises membrane elements based on polysulphone, poly-imid, poly-aramid, cellulose-acetate, or other polymer that exhibits a selectvity for permeating hydrogen to a lower pressure.

6. Hydrogen plant according to any one of claims 1 to 5, comprising:
- an autothermal reformer unit (50) configured to be fed by the gas stream from the fired tubular reactor (5) and by an oxygen rich stream (51),
with the heat-exchanger reformer (22) configured to receive heat (52) provided by the autothermal reformer unit and to produce a gas stream (39) comprising hydrogen and carbon monoxide, and
with the water gas shift reactor (7) being fed by the gas stream from the heat-exchanger reformer.

7. Hydrogen plant according to claim 6, comprising several heat-exchanger reformers, several fired tubular reformers and one autothermal reformer.

8. Hydrogen plant according to any one of claims 1 to 7, wherein the membrane separation system (40) comprises several membrane stages.

9. Process for producing a hydrogen-comprising product gas from a hydrocarbon feedstock implementing hydrogen plant as defined in any one of claims 1 to 8, comprising:
a) Reforming step of the hydrocarbon feedstock (1) to produce a gas stream comprising hydrogen, carbon monoxide, and at least one hydrocarbon as impurity,
b) Water gas shift step (7) to convert the carbon monoxide of the gas stream into carbon dioxide and hydrogen,
c) removal step (20) of carbon dioxide from step b),
d) hydrogen recovery step (8) to produce a hydrogen-enriched gas stream (9) and a waste gas stream (10) from gas stream coming from step c),
e) feeding step of the radiant section (12) of the reformer with a first part of the waste gas stream (10) from hydrogen recovery unit (8),
f) compressing step (27) of a second part of the waste gas stream (10) from hydrogen recovery unit (8),
g) hydrogen-permeating membrane separation step (40) of the compressed second part of the waste gas stream in the membrane separation system to produce a hydrogen-enriched permeate (42) and a hydrocarbon-enriched retentate (41),
h) a first recycling step of the hydrogen-enriched permeate in the radiant section (12) of the reformer (5), and
i) a second recycling step of the hydrocarbon-enriched retentate upstream of the reformer.

10. Process according to claim 9, comprising the feeding step of the membrane separation system (40) with a part of the gas stream delivered by the carbon dioxide removal unit (20).

11. Process according to claim 9 or claim 10, wherein the hydrogen recovery step (8) is a pressure swing adsorption step, a hydrogen-retaining membrane separation step, a cryogenic separation step or an electrochemical compression step.

12. Process according to any one of claims 9 to 11, comprising a hydrodesulphurization step (3) of the hydrocarbon feedstock.

13. Process according to any one of claims 9 to 12, wherein the reforming step a) comprises:
- a conventional steam reforming sub-step (CSR) carried out in the reformer comprising a fired tubular reformer (5), a radiant section (12) and a convection section (13) and producing a first gas stream comprising hydrogen and carbon monoxide,
- a gas heated steam reforming sub-step (GHR) carried out in the heat-exchanger reformer (22) and producing a second gas stream (39) comprising hydrogen and carbon monoxide, and
- an autothermal reforming sub-step (ATR) carried out in the autothermal reformer (50) and producing a third gas stream (52) comprising hydrogen and carbon monoxide,
with CSR sub-step and GHR sub-step carried out in parallel, and CSR sub-step and ATR sub-step carried out in series,
with the autothermal reformer unit (50) being fed by the gas stream (38) from the fired tubular reactor (5) and by an oxygen rich stream (51), and
with the heat-exchanger reformer (22) receiving the heat of the third gas stream (52) provided by the autothermal reformer (50).

14. Process according to claim 13, wherein:
- the first gas stream (38) contains more than 30% of hydrogen,
- the second gas stream (39) contains more than 30% of hydrogen, and
- the third gas stream (52) contains more than 35% of hydrogen.

15. Process according to any one of claims 9 to 14, comprises between step a) and step b) an heat recovery step (6) of the second gas stream before its introduction in the water gas shift reactor (7).

## Patentansprüche

1. Wasserstoffanlage, umfassend:
- mindestens einen Reformer (5) zum Umwandeln eines Kohlenwasserstoffrohmaterials (1) in einen Gasstrom, umfassend Wasserstoff, Kohlenmonoxid und mindestens einen Kohlenwasserstoff als Verunreinigung, der Reformer umfassend einen gebrannten rohrförmigen Reformer (5), einen Strahlungsabschnitt (12), einen Konvektionsabschnitt (13) und einen Wärmerückgewinnungsabschnitt (6),
- einen Wassergas-Shift-Reaktor (WGS-Reaktor) (7) zum Umwandeln des Kohlenmonoxids des Gasstroms in Kohlendioxid und Wasserstoff,
- eine Kohlendioxidentfernungseinheit (20) stromabwärts des WGS-Reaktors und konfiguriert, um Kohlendioxid aus dem Gasstrom zu entfernen,
- eine Wasserstoffrückgewinnungseinheit (8) stromabwärts der Kohlendioxidentfernungseinheit (20) zum Produzieren eines mit Wasserstoff angereicherten Gasstroms (9) und eines Abgasstroms (10),
- einen Durchgang zum Speisen des Strahlungsabschnitts (12) des Reformers (5) mit einem ersten Teil (10) des Abgasstroms aus der Wasserstoffrückgewinnungseinheit,
- einen Verdichter (27) zum Verdichten eines zweiten Teils (26) des Abgasstroms aus der Wasserstoffrückgewinnungseinheit (8),
- ein Wasserstoffpermeationsmembrantrennsystem (40), das konfiguriert ist, um durch den verdichteten zweiten Teil (28) des Abgasstroms gespeist zu werden und um ein mit Wasserstoff angereichertes Permeat (42) und ein mit Kohlenwasserstoff angereichertes Retentat (41) zu produzieren,
- einen Durchgang zum Rückführen des mit Wasserstoff angereicherten Permeats (42) in dem Strahlungsabschnitt (12) des Reformers, und
- einen Durchgang zum Rückführen des mit Kohlenwasserstoff angereicherten Retentats (41) stromaufwärts des Reformers in dem Kohlenwasserstoffrohmaterial,
der Reformer (5) umfassend einen rekuperativen Reformer in dem Strahlungsabschnitt (12) und/oder parallel zu einem Wärmetauscherreformer (22), wodurch der rekuperative Reformer ein Reformer ist, der aus einem oder mehreren rohrförmigen Katalysatorrohren besteht, wobei die Katalysatorrohre einen äußeren Ring mit einem Katalysatorbett umfassen, und wodurch der rekuperative Reformer derart konfiguriert ist, dass die Wärme, die für das Reformieren erforderlich ist, von außen durch den Strahlungsabschnitt sowie von den Innenrohren/-ringen bereitgestellt wird, innerhalb derer das Reformat, das auf dem Katalysatorbett gebildet ist, abgekühlt wird, um Wärme an den Katalysator zu tauschen und um dann die Rohre mit einer niedrigeren Temperatur als die Katalysatorauslasstemperatur zu verlassen.

2. Wasserstoffanlage nach Anspruch 1, umfassend den Durchgang zum Speisen des Membrantrennsystems (40) mit einem Teil des Gasstroms, der durch die Kohlendioxidentfernungseinheit abgegeben wird.

3. Wasserstoffanlage nach Anspruch 1 oder 2, wobei die Wasserstoffrückgewinnungseinheit (8) eine Druckwechseladsorptionseinheit, eine Wasserstoffhaltemembran, eine kryogene Rückgewinnungseinheit oder ein elektrochemischer Kompressor ist.

4. Wasserstoffanlage nach einem der Ansprüche 1 bis 3, umfassend stromaufwärts des Reformers eine Hydrodesulfurierungseinheit (3).

5. Wasserstoffanlage nach einem der Ansprüche 1 bis 4, wobei das Wasserstoffpermeationsmembrantrennsystem (40) Membranelemente umfasst, die auf Polysulfon, Polyimid, Polyaramid, Celluloseacetat oder einem anderen Polymer basieren, das eine Selektivität zum Permeieren von Wasserstoff auf einen niedrigeren Druck aufweist.

6. Wasserstoffanlage nach einem der Ansprüche 1 bis 5, umfassend:
- eine autotherme Reformereinheit (50), die konfiguriert ist, um durch den Gasstrom aus dem gebrannten rohrförmigen Reaktor (5) und durch einen sauerstoffreichen Strom (51) gespeist zu werden,
wobei der Wärmetauscherreformer (22) konfiguriert ist, um Wärme (52) aufzunehmen, die durch die autotherme Reformereinheit bereitgestellt wird, und um einen Gasstrom (39), umfassend Wasserstoff und Kohlenmonoxid, zu produzieren, und
wobei der Wassergas-Shift-Reaktor (7) durch den Gasstrom aus dem Wärmetauscherreformer gespeist wird.

7. Wasserstoffanlage nach Anspruch 6, umfassend mehrere Wärmetauscherreformer, mehrere gebrannte rohrförmige Reformer und einen autothermen Reformer.

8. Wasserstoffanlage nach einem der Ansprüche 1 bis 7, wobei das Membrantrennsystem (40) mehrere Membranstufen umfasst.

9. Verfahren zum Produzieren eines Produktgases, umfassend Wasserstoff, aus einem Kohlenwasserstoffrohmaterial, das die Wasserstoffanlage implementiert, wie in einem der Ansprüche 1 bis 8 definiert, umfassend:
a) Reformierungsschritt des Kohlenwasserstoffrohmaterials (1), um einen Gasstrom, umfassend Wasserstoff, Kohlenmonoxid und mindestens einen Kohlenwasserstoff als Verunreinigung, zu produzieren,
b) Wassergas-Shift-Schritt (7), um das Kohlenmonoxid des Gasstroms in Kohlendioxid und Wasserstoff umzuwandeln,
c) Entfernungsschritt (20) von Kohlendioxid von Schritt b),
d) Wasserstoffrückgewinnungsschritt (8), um einen mit Wasserstoff angereicherten Gasstrom (9) und einen Abgasstrom (10) aus dem aus Schritt c) kommenden Gasstrom zu produzieren,
e) Speiseschritt des Strahlungsabschnitts (12) des Reformers mit einem ersten Teil des Abgasstroms (10) aus der Wasserstoffrückgewinnungseinheit (8),
f) Verdichtungsschritt (27) eines zweiten Teils des Abgasstroms (10) aus der Wasserstoffrückgewinnungseinheit (8),
g) Wasserstoffpermeationsmembrantrennschritt (40) des verdichteten zweiten Teils des Abgasstroms in dem Membrantrennsystem, um ein mit Wasserstoff angereichertes Permeat (42) und ein mit Kohlenwasserstoff angereichertes Retentat (41) zu produzieren,
h) einen ersten Rückführungsschritt des mit Wasserstoff angereicherten Permeats in dem Strahlungsabschnitt (12) des Reformers (5), und
i) einen zweiten Rückführungsschritt des mit Wasserstoff angereicherten Retentats stromaufwärts des Reformers.

10. Verfahren nach Anspruch 9, umfassend den Speiseschritt des Membrantrennsystems (40) mit einem Teil des Gasstroms, der durch die Kohlendioxidentfernungseinheit (20) abgegeben wird.

11. Verfahren nach Anspruch 9 oder 10, wobei der Wasserstoffrückgewinnungsschritt (8) ein Druckwechseladsorptionsschritt, ein Wasserstoffhaltemembrantrennschritt, ein kryogener Trennungsschritt oder ein elektrochemischer Kompressionsschritt ist.

12. Verfahren nach einem der Ansprüche 9 bis 11, umfassend einen Hydrodesulfurierungsschritt (3) des Kohlenwasserstoffrohmaterials.

13. Verfahren nach einem der Ansprüche 9 bis 12, wobei der Reformierungsschritt a) umfasst:
- einen herkömmlichen Dampfreformierungsteilschritt (CSR), der in dem Reformer durchgeführt wird, umfassend einen gebrannten rohrförmigen Reformer (5), einen Strahlungsabschnitt (12) und einen Konvektionsabschnitt (13), und einen ersten Gasstrom, umfassend Wasserstoff und Kohlenmonoxid, produziert,
- einen gasbeheizten Dampfreformierungsteilschritt (GHR), der in dem Wärmetauscherreformer (22) durchgeführt wird und einen zweiten Gasstrom (39), umfassend Wasserstoff und Kohlenmonoxid, produziert, und
- einen autothermen Reformierungsteilschritt (ATR), der in dem autothermen Reformer (50) durchgeführt wird und einen dritten Gasstrom (52), umfassend Wasserstoff und Kohlenmonoxid, produziert,
wobei der CSR-Teilschritt und der GHR-Teilschritt parallel durchgeführt werden und der CSR-Teilschritt und der ATR-Teilschritt in Reihe durchgeführt werden,
wobei die autotherme Reformereinheit (50) durch den Gasstrom (38) aus dem gebrannten rohrförmigen Reaktor (5) und durch einen sauerstoffreichen Strom (51) gespeist wird, und
wobei der Wärmetauscherreformer (22) die Wärme des dritten Gasstroms (52) aufnimmt, der durch den autothermen Reformer (50) bereitgestellt wird.

14. Verfahren nach Anspruch 13, wobei:
- der erste Gasstrom (38) mehr als 30 % Wasserstoff enthält,
- der zweite Gasstrom (39) mehr als 30 % Wasserstoff enthält und
- der dritte Gasstrom (52) mehr als 35 % Wasserstoff enthält.

15. Verfahren nach einem der Ansprüche 9 bis 14, das zwischen Schritt a) und Schritt b) einen Wärmerückgewinnungsschritt (6) des zweiten Gasstroms vor seiner Einführung in den Wassergas-Shift-Reaktor (7) umfasst.

## Revendications

1. Usine à hydrogène comprenant :
- Au moins un reformeur (5) permettant de convertir une charge d'alimentation hydrocarbonée (1) en un courant gazeux comprenant de l'hydrogène, du monoxyde de carbone et au moins un hydrocarbure en tant qu'impureté, ledit reformeur comprenant un reformeur tubulaire à combustion (5), une section rayonnante (12), une section de convection (13), et une section de récupération de chaleur (6),
- Un réacteur de conversion catalytique (WGS) (7) permettant de convertir le monoxyde de carbone du courant gazeux en dioxyde de carbone et hydrogène,
- Une unité d'élimination de dioxyde de carbone (20) en aval du réacteur WGS et conçue pour éliminer le dioxyde de carbone du courant gazeux,
- Une unité de récupération d'hydrogène (8) en aval de l'unité d'élimination de dioxyde de carbone (20) permettant de produire un courant gazeux enrichi en hydrogène (9) et un courant gazeux résiduaire (10),
- Un passage permettant d'alimenter la section rayonnante (12) du reformeur (5) avec une première partie (10) du courant gazeux résiduaire provenant de l'unité de récupération d'hydrogène,
- Un compresseur (27) permettant de comprimer une seconde partie (26) du courant gazeux résiduaire provenant de l'unité de récupération d'hydrogène (8),
- Un système de séparation à membrane (40) perméable à l'hydrogène conçu pour être alimenté par la seconde partie comprimée (28) du courant gazeux résiduaire et pour produire un perméat enrichi en hydrogène (42) et un rétentat enrichi en hydrocarbure (41),
- Le passage permettant de recycler le perméat enrichi en hydrogène (42) dans la section rayonnante (12) du reformeur, et
- Le passage permettant de recycler le rétentat enrichi en hydrocarbure (41) en amont du reformeur dans la charge d'alimentation hydrocarbonée,
avec le reformeur (5) comprenant un reformeur de récupération dans la section rayonnante (12) et/ou en parallèle un reformeur à échangeur de chaleur (22), moyennant quoi le reformeur de récupération est un reformeur constitué d'un ou plusieurs tubes catalytiques tubulaires où les tubes catalytiques se composent d'un anneau externe avec un lit de catalyseur et moyennant quoi le reformeur de récupération est conçu de telle sorte que la chaleur requise pour le reformage est fournie depuis l'extérieur par la section rayonnante ainsi que par les tubes internes/l'anneau à l'intérieur desquels le reformat formé sur le lit de catalyseur est refroidi pour échanger de la chaleur vers le catalyseur, puis sortir desdits tubes à une température plus basse que la température de sortie de catalyseur.

2. Usine à hydrogène selon la revendication 1, comprenant un passage permettant d'alimenter le système de séparation à membrane (40) avec une partie du courant gazeux délivré par l'unité d'élimination de dioxyde de carbone.

3. Usine à hydrogène selon la revendication 1 ou la revendication 2, dans laquelle l'unité de récupération d'hydrogène (8) est une unité d'adsorption à pression modulée, une membrane de rétention d'hydrogène, une unité de récupération cryogénique ou un compresseur électrochimique.

4. Usine à hydrogène selon l'une quelconque des revendications 1 à 3, comprenant en amont du reformeur une unité d'hydrodésulfurisation (3).

5. Usine à hydrogène selon l'une quelconque des revendications 1 à 4, dans lequel le système de séparation à membrane (40) perméable à l'hydrogèné comprend des éléments à membrane à base de polysulfone, de poly-imide, de poly-aramide, d'acétate de cellulose ou d'un autre polymère qui présente une sélectivité pour la perméation de l'hydrogène à une pression inférieure.

6. Usine à hydrogène selon l'une quelconque des revendications 1 à 5, comprenant :
- une unité de reformeur autothermique (50) conçue pour être alimentée par le courant gazeux provenant du réacteur tubulaire à combustion (5) et par un courant riche en oxygène (51),
le reformeur à échangeur de chaleur (22) étant conçu pour recevoir de la chaleur (52) fournie par l'unité de reformeur autothermique et pour produire un courant gazeux (39) comprenant de l'hydrogène et du monoxyde de carbone, et
avec le réacteur de conversion catalytique (7) alimenté par le courant gazeux provenant du reformeur à échangeur de chaleur.

7. Usine à hydrogène selon la revendication 6, comprenant plusieurs reformeurs à échangeur de chaleur, plusieurs reformeurs tubulaires à combustion et un reformeur autothermique.

8. Usine à hydrogène selon l'une quelconque des revendications 1 à 7, dans laquelle le système de séparation à membrane (40) comprend plusieurs étages à membrane.

9. Procédé permettant de produire et de séparer un gaz produit à partir d'une charge d'alimentation hydrocarbonée mettant en oeuvre une usine à hydrogène telle que définie dans l'une quelconque des revendications 1 à 8, comprenant :
a) Une étape de reformage de la charge d'alimentation hydrocarbonée (1) pour produire un courant gazeux comprenant de l'hydrogène, du monoxyde de carbone, et au moins un hydrocarbure en tant qu'impureté,
b) Une étape de conversion catalytique (7) pour convertir le monoxyde de carbone du courant gazeux en dioxyde de carbone et hydrogène,
c) étape d'élimination (20) de dioxyde de carbone de l'étape b),
d) étape de récupération d'hydrogène (8) pour produire un courant gazeux enrichi en hydrogène (9) et un courant gazeux résiduaire (10) à partir d'un courant gazeux provenant de l'étape c),
e) une étape d'alimentation de la section rayonnante (12) du reformeur avec une première partie du courant gazeux résiduaire (10) provenant de l'unité de récupération d'hydrogène (8),
f) une étape de compression (27) d'une seconde partie du courant gazeux résiduaire (10) provenant de l'unité de récupération d'hydrogène (8),
g) une étape de séparation à membrane (40) perméable à l'hydrogène de la seconde partie comprimée du courant gazeux résiduaire dans le système de séparation à membrane pour produire un perméat enrichi en hydrogène (42) et un rétentat enrichi en hydrocarbure (41),
h) une première étape de recyclage du perméat enrichi en hydrogène dans la section rayonnante (12) du reformeur (5), et
i) une seconde étape de recyclage du rétentat enrichi en hydrocarbure en amont du reformeur.

10. Procédé selon la revendication 9, comprenant une étape d'alimentation du système de séparation à membrane (40) avec une partie du courant gazeux délivré par l'unité d'élimination de dioxyde de carbone (20).

11. Procédé selon la revendication 9 ou la revendication 10, dans lequel l'étape de récupération d'hydrogène (8) est une étape d'adsorption à pression modulée, une étape de séparation à membrane de rétention d'hydrogène, une étape de séparation cryogénique ou une étape de compression électrochimique.

12. Procédé selon l'une quelconque des revendications 9 à 11, comprenant une étape d'hydrodésulfurisation (3) de la charge d'alimentation hydrocarbonée.

13. Procédé selon l'une quelconque des revendications 9 à 12, dans lequel l'étape a) de reformage comprend :
- une sous-étape de vaporeformage classique (CSR) réalisée dans le reformeur comprenant un reformeur tubulaire à combustion (5), une section rayonnante (12) et une section de convection (13) et produisant un premier courant gazeux comprenant de l'hydrogène et du monoxyde de carbone,
- une sous-étape de vaporeformage à chauffage par gaz (GHR) réalisée dans le reformeur à échangeur de chaleur (22) et produisant un deuxième courant gazeux (39) comprenant de l'hydrogène et du monoxyde de carbone, et
- une sous-étape de reformage autothermique (ATR) réalisée dans le reformeur autothermique (50) et produisant un troisième courant gazeux (52) comprenant de l'hydrogène et du monoxyde de carbone,
avec la sous-étape CSR et la sous-étape GHR réalisées en parallèle, et la sous-étape CSR et la sous-étape ATR réalisées en série,
avec une unité de reformeur autothermique (50) alimentée par le courant gazeux (38) provenant du réacteur tubulaire à combustion (5) et par un courant riche en oxygène (51), et
avec le reformeur échangeur de chaleur (22) recevant la chaleur du troisième courant gazeux (52) fourni par le reformeur autothermique (50).

14. Procédé selon la revendication 13, dans lequel :
- le premier courant gazeux (38) contient plus de 30 % d'hydrogène,
- le deuxième courant gazeux (39) contient plus de 30 % d'hydrogène, et
- le troisième courant gazeux (52) contient plus de 35 % d'hydrogène.

15. Procédé selon l'une quelconque des revendications 9 à 14, comprenant entre l'étape a) et l'étape b) une étape de récupération de chaleur (6) du deuxième courant gazeux avant son introduction dans le réacteur de conversion catalytique (7).
